(19) Europäisches Patentamt
European Patent Office
Office européen des brevets

(11) EP 3 832 257 A1

(12) EUROPEAN PATENT APPLICATION
published in accordance with Art. 153(4) EPC

(43) Date of publication:
09.06.2021 Bulletin 2021/23

(51) Int Cl.:
G01C 15/00 (2006.01)  G01C 15/06 (2006.01)
G01D 5/347 (2006.01)

(21) Application number: 19843095.1

(22) Date of filing: 26.07.2019

(86) International application number:
PCT/JP2019/029422

(87) International publication number:
WO 2020/026978 (06.02.2020 Gazette 2020/06)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
KH MA MD TN

(30) Priority: 01.08.2018 JP 2018144784

(71) Applicant: TOPCON CORPORATION
Tokyo 174-8580 (JP)

(72) Inventor: YASUTOMI, Satoshi
Tokyo 174-8580 (JP)

(74) Representative: dompatent von Kreisler Selting
Werner -
Partnerschaft von Patent- und Rechtsanwälten
mbB
Deichmannhaus am Dom
Bahnhofsvorplatz 1
50667 Köln (DE)

(54) ANGLE DETECTION SYSTEM AND ANGLE DETECTION METHOD

(57)    Provided is a technique capable of making a measurement of an angle of a remote measuring object. An angle detection system (90) is an angle detection system including an encoder pattern portion (13) to be attached to a measuring object (14), and a surveying instrument (50) . The encoder pattern portion (13) includes a columnar base (13A) and an encoder pattern (13B) provided on an outer circumferential side surface of the base (13A) and representing an angle in a circumferential direction with respect to a predetermined reference direction (RD). The surveying instrument (50) includes an information acquiring unit (55) configured to optically acquire information represented by the encoder pattern (13B), and an arithmetic control unit (64) configured to calculate an angle of the surveying instrument (50) with respect to the reference direction (RD) based on the information.

FIG. 1

**Description**

TECHNICAL FIELD

The present invention relates to an angle detection system and an angle detection method, more specifically, to an angle detection system and an angle detection method to be used for a survey.

BACKGROUND

Conventionally, an absolute encoder has been known as an angle detecting device for measuring an absolute angle (refer to, for example, Patent Literature 1). The absolute encoder incorporates a disc with graduations such as slits according to the gray code rule or an M-sequence code, that is, a so-called absolute encoder pattern. An image of light irradiated on the slits is received by an image sensor, etc., and from the image obtained by the image sensor, an angular position is calculated.

Such an angle detecting device as above measures an angular position corresponding to a rotational displacement of an input shaft connected coaxially to the disc. Therefore, it is necessary to directly attach an angle detecting device main body including the disc, a light emitting element, a light receiving element, and a control unit to a measuring object and make a measurement.

Citation List

Patent Literature

Patent Literature 1 Japanese Published Unexamined Patent Application No. H05-172588

SUMMARY OF INVENTION

Technical Problem

However, at a survey site, there is a case in which measurement of an angle of a remote measuring object is desired. For example, at a construction site, etc., there is a case where a member such as a steel frame is desired to be remotely manipulated and installed in a designated direction. Therefore, a proposal for an angle detecting device capable of measuring an angle of a remote measuring object has been demanded.

The present invention was made in view of these circumstances, and an object thereof is to provide a technique capable of making a measurement of an angle of a remote measuring object.

Solution to Problem

In order to achieve the object described above, an angle detection system according to an aspect of the present invention includes an encoder pattern portion to be attached to a measuring object, and a surveying instrument. The encoder pattern portion includes a columnar base and an encoder pattern including an angle information portion provided on an outer circumferential side surface of the base and representing an angle in a circumferential direction with respect to a predetermined reference direction. The surveying instrument includes an information acquiring unit configured to optically acquire information represented by the encoder pattern, and an arithmetic control unit configured to calculate an angle $\theta_T$ of the surveying instrument with respect to the reference direction based on the information.

In the aspect described above, it is also preferable that the angle information portion represents a bit pattern by disposing regions in two colors in the circumferential direction on the outer circumferential side surface of the encoder pattern portion, and the arithmetic control unit reads the encoder pattern in the circumferential direction, converts the reading result into a bit pattern, identifies a center position of the encoder pattern from the reading result of the pattern, and calculates an angle by comparing the bit pattern included in a predetermined region centered at the center position with the correlation between bit pattern and angle set in advance.

In the aspect described above, it is also preferable that the encoder pattern portion includes a width information portion representing a width of the encoder pattern portion, and the arithmetic control unit extracts information of the width information portion from the information acquired by the information acquiring unit, identifies a center position of the width information portion, recognizes the center position of the width information portion as a center position of the encoder pattern portion, and calculates an angle by comparing the bit pattern included in a predetermined region centered at the center position with the correlation between the bit pattern and angle set in advance.

In the aspect described above, it is also preferable that the measuring object is attached at a predetermined

angle $\theta_B$ in the circumferential direction with respect to the reference direction, and the arithmetic control unit calculates an angle ($\theta$) of the measuring object with respect to the surveying instrument based on the predetermined angle ($\theta_B$) and the angle ($\theta_T$) of the surveying instrument with respect to the reference direction.

In the aspect described above, it is also preferable that the measuring object is attached to the encoder pattern portion turnably around a central axis of the encoder pattern portion, the measuring object includes a rotation angle-measuring device capable of measuring the predetermined angle and a communication unit, and the surveying instrument is configured to be capable of communicating with the communication unit.

In the aspect described above, it is also preferable that the arithmetic control unit includes a reading correction unit configured to correct the columnar encoder pattern so as to develop the encoder pattern into a plane by dividing the encoder pattern representing the bit pattern by a reduction ratio set in advance according to a ratio of distance from a center position in a diameter direction of the encoder pattern portion.

In the aspect described above, it is also preferable that the information acquiring unit is a camera configured to acquire information represented by the encoder pattern as an image.

In the aspect described above, it is also preferable that the information acquiring unit is a scanner configured to acquire information represented by the encoder pattern as a received light amount distribution by transmitting scanning light to the encoder pattern and receiving reflected light from the encoder pattern.

In the aspect described above, it is also preferable that the encoder pattern portion further includes a reflection target, the surveying instrument is configured to measure a distance to the reflection target by transmitting distance-measuring light to the reflection target and receiving reflected light from the reflection target, and measure an angle to the reflection target, and the arithmetic control unit identifies the encoder pattern based on distance measurement data of the reflection target.

In the aspect described above, it is also preferable that the encoder pattern portion further includes a reflection target, the surveying instrument is configured to measure a distance to the reflection target by transmitting distance-measuring light to the reflection target and receiving reflected light from the reflection target, and measure an angle to the reflection target, and the arithmetic control unit sets a reading direction in the circumferential direction based on angle measurement data of the reflection target.

An angle detection method according to another aspect of the present invention is a method for detecting an angle by using an encoder pattern portion including a columnar base and an encoder pattern disposed on an outer circumferential side surface of the base and representing an angle in the circumferential direction with respect to a predetermined reference direction, and a surveying instrument including an information acquiring unit, and includes (a) attaching the encoder pattern portion to the measuring object at a predetermined angle in the circumferential direction of the encoder pattern portion, (b) optically acquiring information represented by the encoder pattern as pattern information by the information acquiring unit, and (c) operating an angle of the surveying instrument with respect to the reference direction based on pattern information acquired through (b).

In this description, the term "encoder pattern" is a pattern having angle information in which a reference point is set to 0°. This pattern may include not only a pattern detectable by natural light but also a pattern detectable by polarized light.

The phrase "reference direction of the encoder pattern" in the present description means a direction of 0° of the encoder pattern.

In this description, the term "direction angle (angle in the circumferential direction) of the surveying instrument with respect to the reference direction of the encoder pattern" means "an angle of a straight line connecting a center of the encoder pattern portion and the surveying instrument with respect to the direction of 0° of the encoder pattern," and this angle is a value to be obtained by reading the encoder pattern.

Benefit of Invention

According to the configuration described above, an angle of a remote measuring object can be measured.

BRIEF DESCRIPTION OF DRAWINGS

FIG. 1 is a configuration block diagram of an angle detection system according to a first embodiment of the present invention and a survey system including this angle detection system.
FIG. 2 is an external schematic view of the survey system including the angle detection system of the same embodiment.
FIG. 3 is a perspective view of a measurement module relating to the survey system described above.
FIG. 4A is an enlarged perspective view of an encoder pattern portion relating to the angle detection system of the same embodiment, and FIG. 4B is a view of an encoder pattern of the encoder pattern portion, cut, open and developed into a plane (partially omitted) .

FIG. 5 is a plan view of the measurement module described above.

FIG. 6 is a flowchart of an operation for measuring a measurement point by the survey system described above.

FIG. 7 is a flowchart of angle detection using the angle detection system of the same embodiment.

FIG. 8A illustrates a landscape image around the encoder pattern portion acquired by a camera of the angle detection system of the same embodiment, FIG. 8B is an enlarged image of the encoder pattern portion cut out from FIG. 8A, and FIG. 8C is a graph illustrating results obtained by linearly reading FIG. 8B in the circumferential direction and converting the reading results into pixel values.

Figs. 9A and 9B are diagrams describing a positional relationship between a reflection target and a measurement point in a case where the measurement point not in sight is measured by using the survey system described above.

FIG. 10 is a perspective view of an encoder pattern according to a modification of the angle detection system of the same embodiment.

FIG. 11 is a configuration block diagram of a survey system including an angle detection system according to another modification of the same embodiment.

FIG. 12 is a configuration block diagram of an angle detection system according to a second embodiment of the present invention, and a survey system including this angle detection system.

FIG. 13 is a flowchart of angle detection using the angle detection system according to the same embodiment.

Figs. 14A and 14B are diagrams describing a scanning direction of the scanner of the angle detection system according to the same embodiment.

FIG. 15 is a configuration block diagram of an angle detection system according to a third embodiment of the present invention, and a survey system including this angle detection system.

FIG. 16 is a flowchart of angle detection using the angle detection system of the same embodiment.

Figs. 17A to 17C are diagrams describing a reading direction of a camera of the same angle detection system.

Figs. 18A and 18B are diagrams describing a scanning direction of a scanner of the angle detection system according to the second embodiment of the present invention.

FIG. 19 is a configuration block diagram of an angle detection system according to a fourth embodiment of the present invention, and a survey system including this angle detection system.

FIG. 20 is a perspective view of a measurement module relating to the survey system including the angle detection system of the same embodiment.

FIG. 21 is a flowchart of an operation for measuring a measurement point by the survey system including the angle detection system of the same embodiment.

DESCRIPTION OF EMBODIMENTS

Preferred embodiments of the present invention are described with reference to the drawings. In the following description of the embodiments, the same components are provided with the same reference signs, and overlapping description is omitted. In each drawing, components are enlarged and schematically illustrated as appropriate for convenience of description, and which may not reflect actual ratios.

1. First Embodiment

1-1. Configuration of angle detection system

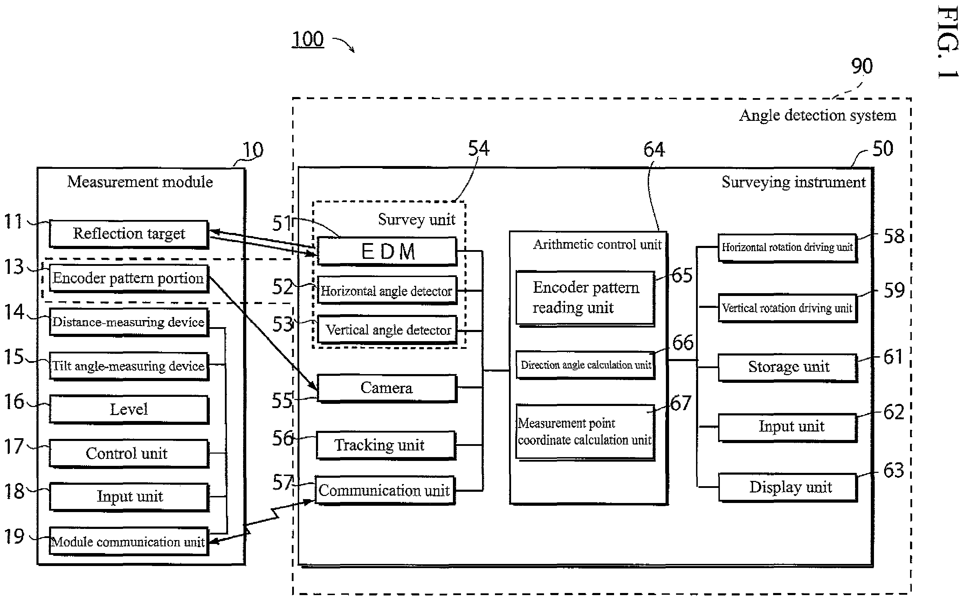

A configuration of an angle detection system 90 according to a first embodiment is described with reference to Figs. 1 to 4. The angle detection system 90 is provided in a survey system 100. The survey system 100 includes a measurement module 10 and a surveying instrument 50. The angle detection system 90 is a system for measuring an angle of a distance-measuring device 14 as a measuring obj ect, and includes an encoder pattern portion 13 of the measurement module 10 and the surveying instrument 50.

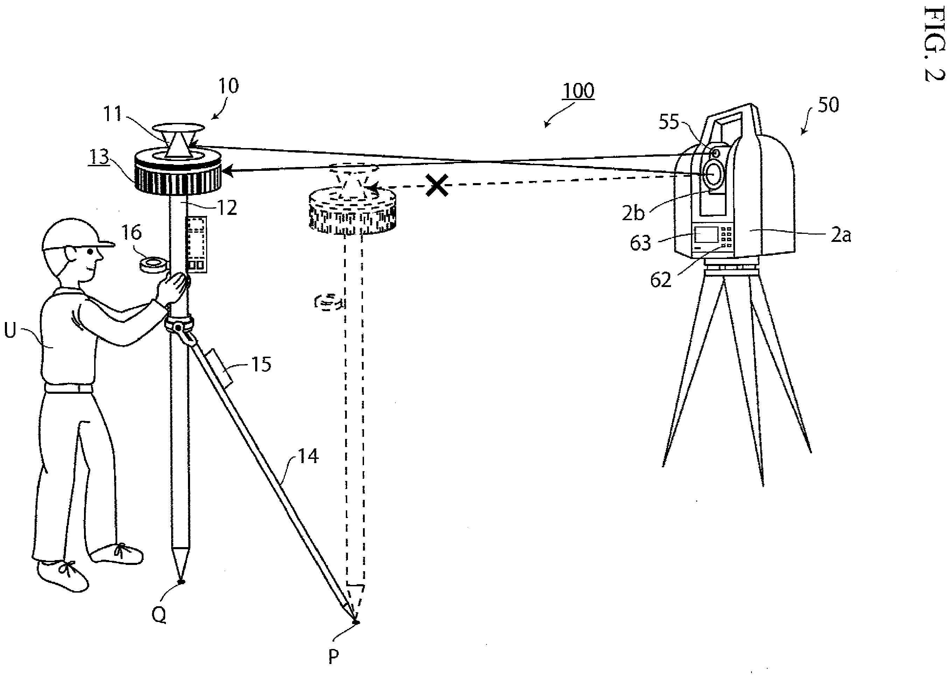

The survey system 100 is a system for surveying a measurement point P not in sight from the surveying instrument 50. As illustrated in FIG. 2, when measuring a measurement point P not in sight from the surveying instrument 50, a point Q in sight from the surveying instrument 50 is set as a temporary measurement point, and a vertical state of a support member 12 is secured while a tip end 12A of the support member 12 is brought into contact with the point Q, and the distance-measuring device 14 is extended or contracted in the direction of the double-headed arrow B to bring a tip end 14A into contact with the measurement point P, and measures the reflection target 11.

As illustrated in Figs. 1 to 3, the measurement module 10 includes a pole as the support member 12 for supporting a prism as the reflection target 11, and to the support member 12, the encoder pattern portion 13, the distance-measuring device 14, a tilt angle-measuring device 15, a level 16, a control unit 17, an input unit 18, and a module communication unit 19 are attached.

The reflection target 11 is a so-called 360-degree prism configured by, for example, radially combining a plurality of triangular pyramid prisms, and reflects light made incident from its entire circumference (360°) toward directions opposite to the incident directions. That is, the reflection target 11 reflects distance measuring light from the surveying instrument 50 toward the surveying instrument 50. The reflection target 11 is not limited to the 360-degree prism, and a normal prism to be used for a survey may be used.

The support member 12 extends for a certain length, and fixes and supports the reflection target 11 so that the central axis A of the support member 12 passes through the center O of the reflection target 11.

The encoder pattern portion 13 is configured by being provided with an encoder pattern 13B on a side circumferential surface of a base 13A that has a short columnar shape. The base 13A is fixed between the support member 12 and the reflection target 11 so as to become coaxial with a central axis A of the support member 12 by a means such as screwing a threaded portion (not illustrated) formed on an outer circumference of the support member into a screw hole (not illustrated) formed at a center of the base 13A, etc. In this way, the encoder pattern portion 13 is attached to a distance measuring device 14, which is a measuring object, via the support member 12.

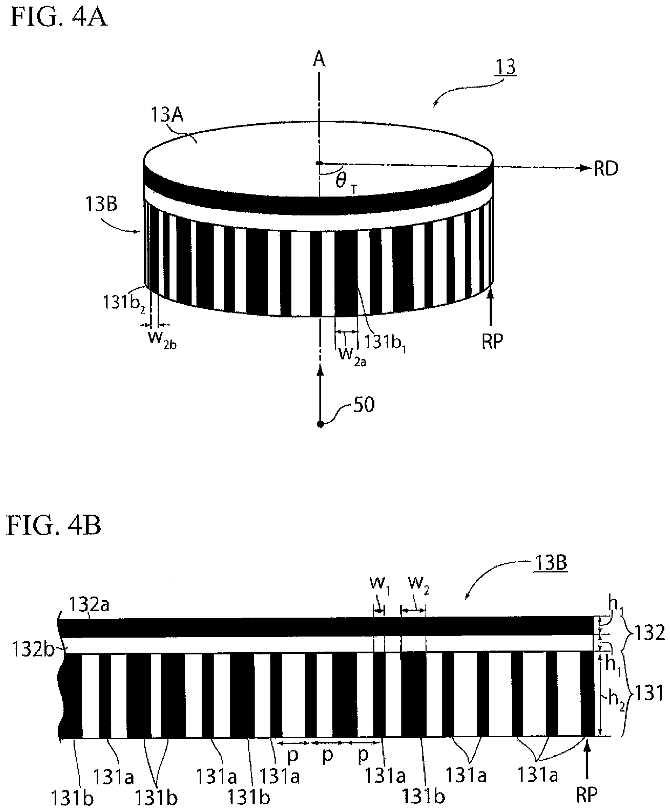

As illustrated in Figs. 4A and 4B, the angle information portion 131 is a barcode-like pattern formed by disposing, for example, narrow-width black vertical lines 131a with a width $w_1$ and wide-width black vertical lines 131b with a width $w_2$ at even pitches p on a white background by defining the vertical lines 131a as "0" and the vertical lines 131b as "1" so as to generate an M-sequence recurring random number code. The encoder pattern 13B is configured so that, by setting a direction (hereinafter, referred to as a "reference direction of the encoder pattern" or, simply, a "reference direction") RD from the center of the encoder pattern portion 13 to a reference point RP as 0°, an angle (hereinafter, referred to as an "encoder pattern read angle") calculated from the read pattern corresponds to an angle $\theta_T$ made in the circumferential direction between the reference direction RD and a straight line connecting the surveying instrument 50 and a central axis A of the support member 12 matching a central axis of the encoder pattern portion 13 (hereinafter, the "central axis of the encoder pattern portion" is also represented by the reference sign A).

The angle information portion 131 is configured so as to realize desired resolution by changing a bit number.

The bit pattern is not limited to the M-sequence code, and bit patterns such as a gray code and a pure binary code can be used, and these can be generated by a publicly known method. However, use of the M-sequence code is advantageous because it enables an increase in bit number without increasing tracks in number, and realizes high resolution with a simple configuration. The width information portion 132 includes a black zone 132a with a predetermined height $h_1$ and a white zone 132b with the same height. The black zone 132a and the white zone 132b extend across the entire circumference of the encoder pattern portion 13 in the circumferential direction.

The encoder pattern 13B can be provided in the encoder pattern portion 13 by various publicly known methods that are used for forming patterns. The encoder pattern 13B may be provided by, for example, printing on a white sheet by a method of general printing, such as inkjet printing, and sticking the sheet onto the side circumferential surface of the base 13A. According to this method, the encoder pattern portion 13 can be formed by an extremely inexpensive and simple method. The encoder pattern 13B may be provided by being directly printed on a resin-made base 13A. Alternatively, the encoder pattern 13B may be provided on a metal-made base 13A by a method such as painting or vapor deposition, etc.

In the example illustrated in the drawings, the encoder pattern portion 13 is provided below and adjacent to the reflection target 11. However, the positional relationship between the encoder pattern portion 13 and the reflection target 11 is not limited to this, and they may be disposed in other ways as long as the encoder pattern portion 13 becomes coaxial with the central axis A.

That is, the encoder pattern portion 13 may be disposed above the reflection target 11. The encoder pattern portion 13 and the reflection target 11 may be disposed away from each other.

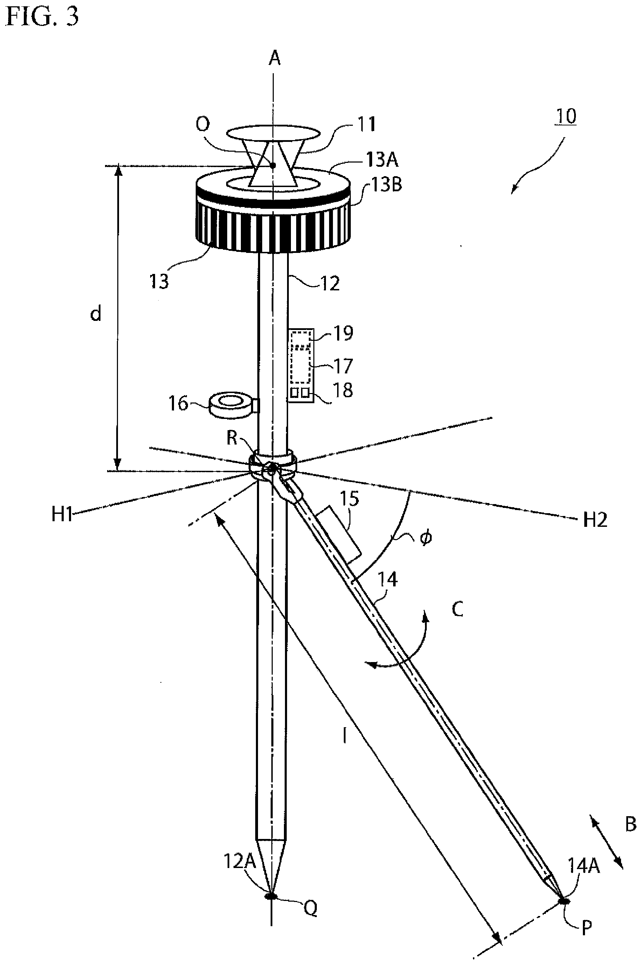

The distance-measuring device 14 is a digital metering rod. The distance-measuring device 14 is configured to be extensible and contractible in the direction of the double-headed arrow B in FIG. 3. By setting a point R on the central axis A of the support member 12 as a base point, the distance-measuring device 14 is attached to the support member 12 turnably around a horizontal axis H1 passing through the point R in the direction of the double-headed arrow C in FIG. 2. The distance-measuring device 14 can measure a distance between the base point R and the tip end 14A, that is, a distance 1 between the base point R and the measurement point P, and outputs the measurement result to the module communication unit 19.

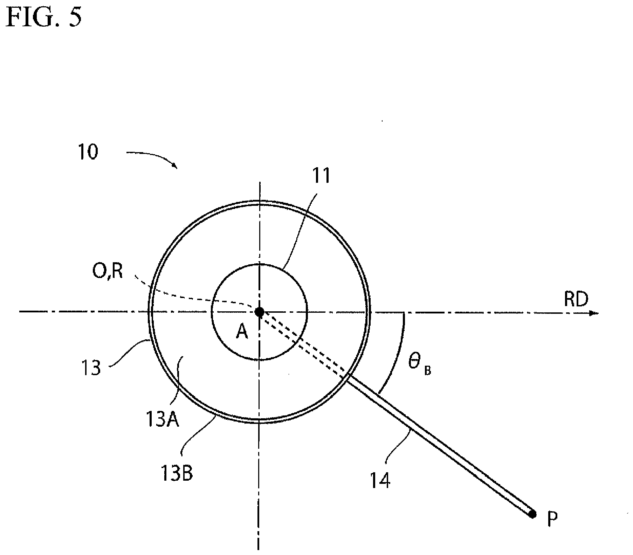

A distance d between the base point R of the distance-measuring device 14 and the center O of the reflection target 11 is known in advance. Further, an angle $\theta_B$ (refer to FIG. 5) of the distance-measuring device 14 around the central axis A of the support member 12 with respect to the reference direction RD of the encoder pattern 13B is measured at the time the distance-measuring device 14 is fitted to the support member 12, and is set as a predetermined value.

When outputting a measurement result of the distance 1 to the module communication unit 19, the distance-measuring device 14 also outputs the data on the distance d between the center O of the reflection target 11 and the base point R of the distance-measuring device 14 and the angle $\theta_B$ of the distance-measuring device 14 around the central axis A of the support member 12 to the module communication unit 19.

The tilt angle-measuring device 15 is a tilt sensor, and for example, a tilt sensor that makes detection light incident on a horizontal liquid surface and detects levelness based on a change in reflection angle of reflected light of the detection light, or an electronic bubble tube that detects a tilt based on a position change of sealed bubble, can be used.

The tilt angle-measuring device 15 is attached to the distance-measuring device 14 so as to be parallel to the distance-measuring device 14. The tilt angle-measuring device 15 measures a tilt angle (that is, an angle in the vertical direction) $\phi$ of the distance-measuring device 14 with respect to a horizontal plane (plane H1-H2 in FIG. 3) of the distance-measuring device 14, and outputs the measurement result to the module communication unit 19.

The level 16 is a bubble tube formed by sealing a bubble and liquid in a columnar container. The level 16 is attached to the support member 12 so that a vertical state of the central axis A of the support member 12 can be ensured by keeping the bubble positioned within a central gauge line.

The control unit 17 is, for example, an MPU (Micro Processing Unit). The control unit 17 is connected to the distance-measuring device 14, the tilt angle-measuring device 15, the input unit 18, and the module communication unit 19. The connection may be made by means of wireless communication, etc. The control unit 17 performs measurements by the distance-measuring device 14 and the tilt angle-measuring device 15 in accordance with a command to make a measurement, etc., input from the input unit 18. In addition, the control unit transmits measurement data to the surveying instrument 50 through the module communication unit 19.

The input unit 18 is, for example, a button switch, and turns the power supply ON/OFF and inputs commands for measurement start, etc., by being pressed by an operator U.

The module communication unit 19 enables wireless communication between the measurement module 10 and the surveying instrument 50. The module communication unit 19 transmits measurement data acquired by the measurement module 10 to the communication unit 57 of the surveying instrument 50.

Herein the measurement data includes a distance 1 between the base point R of the distance-measuring device 14 and the measurement point P acquired by the distance-measuring device 14, a tilt angle $\phi$ of the distance-measuring device 14 with respect to a horizontal plane acquired by the tilt angle-measuring device 15, a distance d known in advance between the center O of the reflection target 11 and the base point R of the distance-measuring device 14, and an angle $\theta_B$ of the distance-measuring device 14 around the central axis A of the encoder pattern portion 13 with respect to the reference direction RD of the encoder pattern 13B.

The control unit 17, the input unit 18, and the module communication unit 19 may be attached to the support member of the measurement module 10 in an appropriate manner as in the illustrated example, or may be configured as a separate body like a remote controller.

Next, the surveying instrument 50 is described.

As illustrated in FIG. 2, the surveying instrument 50 is installed at a known point by using a tripod, and includes, in order from the lower side, a leveling unit, a base portion provided on the leveling unit, a bracket portion 2a that rotates horizontally on the base portion, and a telescope 2b that rotates vertically at the center of the bracket portion 2a.

The surveying instrument 50 is a total station. As illustrated in FIG. 1, the surveying instrument 50 includes an EDM 51, a horizontal angle detector 52, a vertical angle detector 53, a camera 55, a tracking unit 56, a communication unit 57, a horizontal rotation driving unit 58, a vertical rotation driving unit 59, a storage unit 61, an input unit 62, a display unit 63, and an arithmetic control unit 64. The EDM 51, the horizontal angle detector 52, the vertical angle detector 53, the camera 55, the tracking unit 56, the communication unit 57, the horizontal rotation driving unit 58, the vertical rotation driving unit 59, the storage unit 61, the input unit 62, and the display unit 63 are connected to the arithmetic control unit 64.

The horizontal angle detector 52, the vertical angle detector 53, the communication unit 57, the horizontal rotation driving unit 58, the vertical rotation driving unit 59, the storage unit 61, and the arithmetic control unit 64 are housed in the bracket portion 2a. The input unit 62 and the display unit 63 are provided outside the bracket portion 2a. The EDM 51 and the tracking unit 56 are housed in the telescope 2b, and the camera 55 is attached to an upper portion of the telescope 2b.

The EDM 51 includes a light emitting element, a distance-measuring optical system, and a light receiving element. The EDM 51 measures a distance to the reflection target 11 by emitting distance-measuring light from the light emitting element and receiving reflected light from the reflection target 11 by the light receiving element.

The horizontal angle detector 52 and the vertical angle detector 53 are rotary encoders, and detect rotation angles around rotation axes of the bracket portion 2a and the telescope 2b respectively driven by the horizontal rotation driving unit 58 and the vertical rotation driving unit 59 described later, and obtains a horizontal angle and a vertical angle of a collimation optical axis A.

The EDM 51, the horizontal angle detector 52, and the vertical angle detector 53 constitute a survey unit 54 that is an essential portion of the surveying instrument 50.

The camera 55 functions as an information acquiring unit, and includes an optical system and an image pickup device publicly known as a camera.

The camera 55 is attached to an upper portion of the telescope 2b so as to be parallel to the telescope 2b. The camera 55 is configured so as to be collimated to the encoder pattern portion 13 whose positional relationship with the reflection target 11 is fixed, in a state where the telescope 2b is collimated to the reflection target 11. Therefore, the camera 55 may be configured turnably upward, downward, leftward, and rightward when capturing an image. As the image pickup device, an image sensor such as a CCD sensor or a CMOS sensor is used. The camera 55 receives light by using the image pickup device through the optical system of the camera, and captures an image of the light. In other words, the camera 55 optically acquires information represented by the encoder pattern 13B as an image. The image pickup device is connected to the arithmetic control unit 64, and converts acquired data into digital data and outputs the digital data to the arithmetic processing unit 64.

The tracking unit 56 includes a light emitting element for emitting tracking light, a light receiving element that is an image sensor, for example, a CCD sensor, a CMOS sensor, etc., and a tracking optical system that shares optical elements with the distance-measuring optical system. The tracking unit 56 is configured to project infrared laser light with a wavelength different from that of the distance-measuring light onto a tracking object (target), receive reflected light from the tracking object, and track the tracking object based on the light receiving result.

The tracking unit 56 is not essential and can be omitted when a tracking function is not required. When the tracking unit 56 is provided, it is also possible that the function of the camera 55 is incorporated in the tracking unit 56, and the independent camera 55 is omitted.

The communication unit 57 enables wireless communication with the module communication unit 19 of the measurement module 10. The communication unit 57 receives measurement data from the module communication unit 19.

The horizontal rotation driving unit 58 and the vertical rotation driving unit 59 are motors, and are controlled by the arithmetic control unit 64 to respectively rotate the bracket portion 2a horizontally and the telescope 2b vertically.

The storage unit 61 includes a ROM (Read Only Memory) and a RAM (Random Access Memory).

In the ROM, programs and data necessary for operation of the entire surveying instrument 50 are stored. The arithmetic control unit 64 read these programs out to the RAM to start performing various processing of the surveying instrument 50. In the ROM, correlation between bit pattern and angle is stored in the form of a table, etc.

The RAM temporarily holds data for operating three-dimensional position coordinates of the center point O of the reflection target, three-dimensional position coordinates of the measurement point P, and the direction angle $\theta_T$ of the surveying instrument.

The input unit 62 is, for example, an operation button. An operator can input commands to be executed by the surveying instrument 50 to the input unit 62 and select settings.

The display unit 63 is, for example, a liquid crystal display, and displays various types of information such as measurement results and operation results in response to a command of the arithmetic control unit 64. In addition, the display unit 63 displays setting information for inputs by an operator and commands input by an operator from the input unit 62.

The input unit 62 and the display unit 63 may be integrally configured as a touch panel display.

The arithmetic control unit 64 includes a CPU (Central Processing Unit) and a GPU (Graphical Processing Unit). The arithmetic control unit 64 performs various processing for fulfilling functions of the surveying instrument 50. In detail, the arithmetic control unit 64 controls the rotation driving units 58 and 59 and performs automatic tracking by the tracking unit 56. In addition, the arithmetic control unit 64 controls the EDM 51 and acquires distance measurement data of the reflection target. Additionally, the arithmetic control unit 64 acquires angle measurement data of the reflection target 11 from values detected by the horizontal angle detector 52 and the vertical angle detector 53. In addition, the arithmetic control unit 64 calculates three-dimensional position coordinates of the center O of the reflection target 11 from the distance measurement data and the angle measurement data. Further, the arithmetic control unit 64 controls the camera 55 to acquire an image.

The arithmetic control unit 64 includes, as functional units, an encoder pattern reading unit 65, a direction angle calculation unit 66, and a measurement point coordinate calculation unit 67.

The encoder pattern reading unit 65 recognizes the encoder pattern from an image acquired by the camera 55, and converts the encoder pattern 13B into a bit pattern.

The direction angle calculation unit 66 calculates a direction angle $\theta_T$ of the surveying instrument 50 with respect to the reference direction RD of the encoder pattern 13B based on the reading result of the encoder pattern reading unit 65.

The measurement point coordinate calculation unit 67 calculates three-dimensional position coordinates P (X, Y, Z) of the measurement point P from three-dimensional position coordinates O ($x_P$, $y_P$, $z_P$) of the center O of the reflection target 11 calculated from measurement data of the measurement module 10, the direction angle $\theta_T$ of the surveying instrument 50 with respect to the reference direction RD of the encoder pattern 13B, the distance measurement data, and the angle measurement data.

Each functional unit may be configured by software, or may be configured by a dedicated arithmetic circuit. A functional unit configured by software and a functional unit configured by a dedicated arithmetic circuit may be mixed.

The angle detection system 90 consists of the encoder pattern portion 13 and the surveying instrument 50 including the camera 55 and the arithmetic control unit 64. The encoder pattern reading unit 65 and the direction angle calculation unit 66 of the arithmetic control unit 64 function as the arithmetic control unit 64 of the angle detection system 90.

1-2. Survey of measurement point

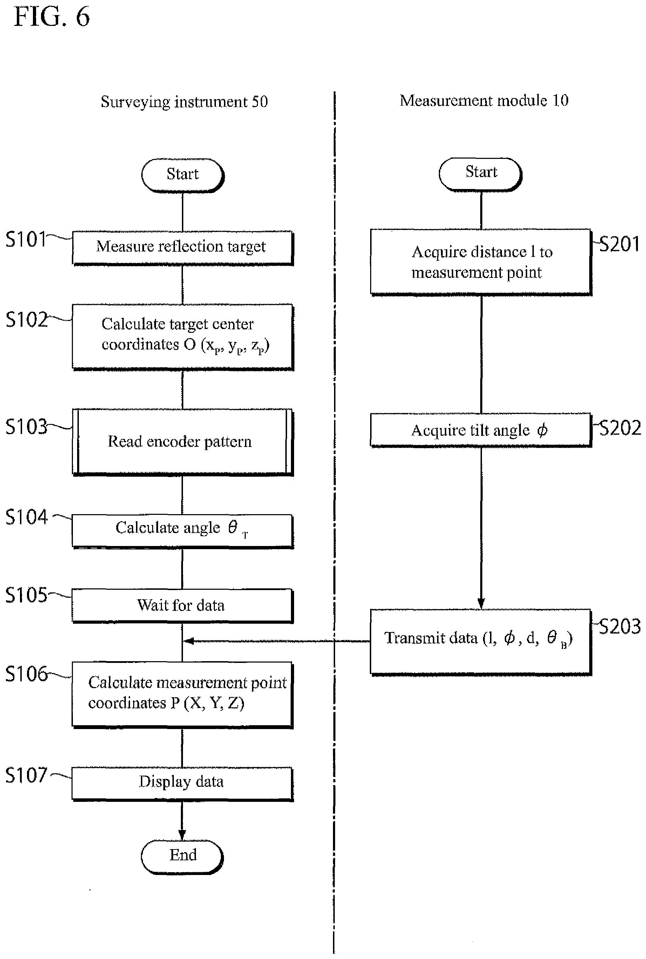

FIG. 6 is a flowchart of operations of the surveying instrument 50 and the measurement module 10 in a case where a measurement point P not in sight from the surveying instrument 50 is surveyed by using a survey system 100 including the angle detection system according to the present embodiment.

First, when a measurement starts in a mode for measuring a measurement point that is not in sight in response to an operation such as pressing a measurement start button by an operator on the surveying instrument side, in Step S101, the survey unit 54 measures the center O of the reflection target 11.

Specifically, the EDM 51 measures a distance from the surveying instrument 50 to the reflection target 11 by transmitting distance-measuring light toward the reflection target 11 and receiving reflected distance-measuring light reflected from the reflection target 11. In addition, the horizontal angle detector 52 and the vertical angle detector 53 measure angles of the reflection target 11.

Next, in Step S102, the arithmetic control unit 64 calculates coordinates O $(x_P, y_P, z_P)$ of the center O of the reflection target 11 by a publicly known method based on the distance data and the angle data acquired in Step S101. The calculation result is stored in the storage unit 61.

Next, in Step S103, the camera 55 captures a landscape image in a collimation direction of the telescope 2b and reads the encoder pattern 13B of the measurement module 10.

Next, in Step S104, the arithmetic control unit 64 calculates a direction angle $\theta_T$ of the surveying instrument 50 with respect to the reference direction RD of the encoder pattern 13B based on the reading result of the encoder pattern 13B in Step S103. The calculation result is stored in the storage unit 61.

Steps S103 and S104 are operations of the angle detection system 90, and the details of these operations will be described later.

Next, in Step S105, the arithmetic control unit 64 waits for reception of the measurement data from the measurement module 10.

On the other hand, in the measurement module 10, a measurement is started in response to an operation such as pressing a measurement start button of the measurement module by an operator U on the measurement module side according to a cue, etc., from the operator on the surveying instrument side. Next, in Step S201, the distance-measuring device 14 measures a distance 1 from the base point R of the distance-measuring device 14 to the measurement point P, and outputs the measurement result data to the module communication unit 19 together with data on the distance d between the center O of the reflection target 11 and the base point R of the distance-measuring device 14, and the angle $\theta_B$ around the central axis of the support member 12.

Next, in Step S202, the tilt angle-measuring device 15 measures a tilt angle $\phi$ of the distance-measuring device 14 with respect to a horizontal plane passing through the base point R of the distance-measuring device 14, and outputs the measurement result data to the module communication unit 19.

The processing in Steps S201 and S202 do not necessarily have to be performed in this order, and may be simultaneously performed or performed in the reverse order.

Next, in Step S203, the module communication unit 19 transmits, as measurement data of the measurement module 10, the distance 1 between the base point R of the distance-measuring device 14 and the measurement point P, the tilt angle $\phi$ of the distance-measuring device 14 with respect to the horizontal plane, the distance d between the center O of the reflection target 11 and the base point R of the distance-measuring device 14, and the angle $\theta_B$ of the distance-measuring device 14 around the central axis A of the support member 12 with respect to the reference direction RD of the encoder pattern 13B, to the surveying instrument 50.

Concerning the data transmission in Step S203, all measurement data do not necessarily have to be transmitted after the processing of both Steps S201 and S202, and it is also possible that data acquired in each step is transmitted to the surveying instrument 50 after each Step S201 or S202 is finished.

Then, when the measurement data transmitted from the measurement module 10 is received by the surveying instrument 50, in Step S106, the arithmetic control unit 64 calculates measurement point coordinates P (X, Y, Z) based on the measurement data and the angle $\theta_T$ of the surveying instrument 50 in the circumferential direction with respect to the reference direction RD of the encoder pattern 13B. Details of the operation of the measurement point coordinates will be described later.

Next, in Step S107, in the surveying instrument 50, the measurement point coordinates P (X, Y, Z) obtained by the operations are displayed on the display unit 63, and then the measurement is ended.

1-3. Angle detection (encoder pattern reading)

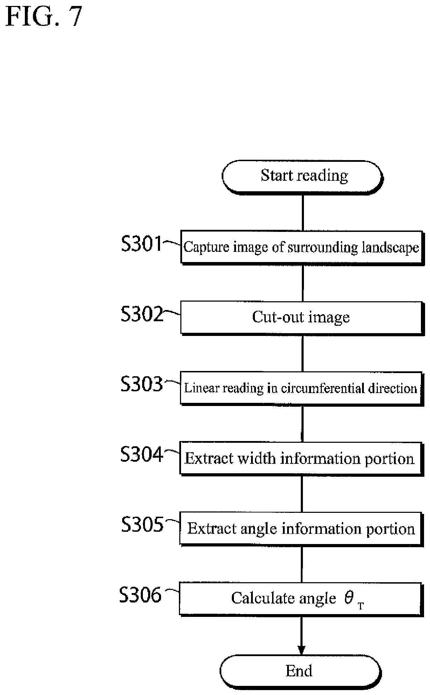

FIG. 7 is a flowchart of angle detection in the angle detection system 90, and illustrates an example of processing corresponding to Steps S103 and S104 described above. In Step S103, when encoder pattern reading starts, the surveying instrument 50 executes the following operations.

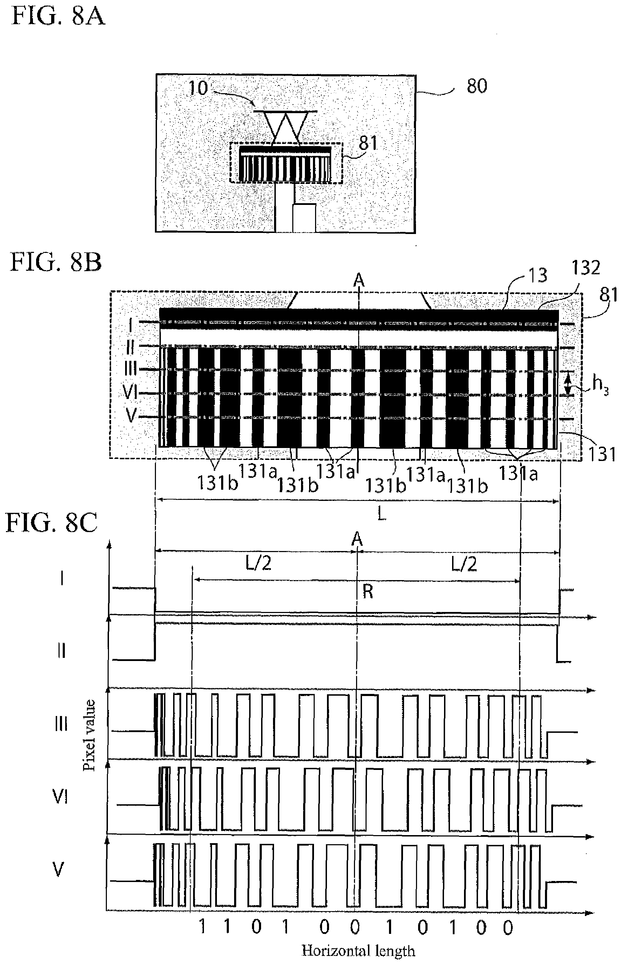

When angle detection is started, in Step S301, the camera 55 captures an image of a landscape around the encoder pattern portion 13 (FIG. 8A).

Next, in Step S302, the encoder pattern reading unit 65 recognizes and cuts out a range 81 of the encoder pattern 13B into a rectangular shape from the acquired image (FIG. 8B).

Next, in Step S303, the encoder pattern reading unit 65 linearly reads the image of the range 81 of the encoder pattern 13b cut out in Step S302 in the circumferential direction of the encoder pattern. For example, as illustrated in FIG. 8B, the image is linearly read at the positions I-V and converted into pixel values. The pixel value becomes smaller as the image becomes dark (black), and becomes larger as the image becomes bright (white). Therefore, the reading results at the respective positions I to V (hereinafter, referred to as "pixel rows I to V") can be expressed as illustrated in, for example, FIG. 8C.

Regarding a reading interval, for example, as illustrated in FIG. 8B, from the image of the encoder pattern 13B obtained through Step S301 and known information on the encoder pattern 13B, a height $h_1$ (FIG. 4B) of the black zone 132a and the white zone 132b of a width information portion 132 and a height $h_2$ (FIG. 4B) of the vertical lines 131a, 131b in the image are roughly calculated in advance, and the reading interval is preferably set to an interval $h_3$ smaller than the height $h_1$ and shorter than 1/2 of the height $h_2$. This enables reliable capture of the angle information portion 131 and the width information portion 132.

Next, inStepS304, from the reading results in Step S303, reading results of the width information portion 132 are extracted. In detail, a portion with a pixel value smaller than a predetermined threshold is determined as a black portion, and a portion with a pixel value larger than the predetermined threshold is determined as a white portion, and a pixel row in which at least one of the black portion and the white portion continues for a certain length is determined as a reading result of the width information portion 132.

As a result, in FIG. 8C, it is found that pixel rows I and II correspond to the width information portion 132. Then, from the detected width L of the encoder pattern 13B (diameter of the encoder pattern portion 13), a position bisecting L is identified as a center position A of the encoder pattern 13B. By providing the width information portion 132, for example, even when the background of the encoder pattern portion 13 is black or white and a boundary between the encoder pattern 13B and the background is unclear, as long as one of the zones can be detected, a center position of the encoder pattern 13B can be accurately obtained.

Next, in Step S305, from the linear reading results in Step S303, correlations between pixel rows are calculated, and portions having correlations higher than a predetermined value are extracted as the reading results of the angle information portion 131.

In the example illustrated in FIG. 8C, pixel value patterns of the pixel rows III to V show high correlations. Therefore, the pixel rows III to V are found to be the results of reading of the angle information portion 131.

Then, pixel values of the extracted pixel rows III to V are added up in the vertical direction and mean values are calculated. A case where the result of the calculation is smaller than a predetermined threshold is determined as a black portion, and widths of the respective black portions are obtained. Next, whether the obtained width value corresponds to a narrow width or a wide width is determined, and a width of a value determined as a narrow width is read as a bit "0, " that is, a vertical line 131a, and a width of a value determined as a wide width is read as a bit "1," that is a vertical line 131b. In this way, when a pixel value is calculated as a mean value from the plurality of pixel rows, for example, even when a positionally deviated pixel row is generated like the pixel row IV, influence from the positional deviation can be reduced, and reading accuracy can be improved. Extraction using an arithmetic mean of several measurements is also performed in the same manner.

Since the encoder pattern portion 13 is columnar, the vertical line widths $w_1$ and $w_2$ and the pitch p are observed to be narrower than the actual widths with increasing distance from the center. For example, in FIG. 4A, a width $w_{2a}$ of the wide-width vertical line $131b_1$ near the center is observed to be substantially equal to a width (actual width) $w_2$ of the wide-width vertical line 131b in the developed view illustrated in FIG. 4B. On the other hand, a width $w_{2b}$ of the wide-width vertical line $131b_2$ most distant from the central portion is observed to be narrower than the actual width $w_2$. The same applies to the width $w_1$ and the pitch p. Therefore, it is preferable that the widths $w_1$ and $w_2$ are set so that ranges of changes in widths $w_1$ and $w_2$ do not overlap each other in consideration of the influence in which an observed width changes according to the disposition.

Next, the process shifts to Step S306, and the direction angle calculation unit 66 obtains an angle in the circumferential direction with respect to the reference direction RD of the encoder pattern 13B, that is, a direction angle $\theta_T$ of the surveying instrument 50 with respect to the reference direction RD by comparing a bit pattern in a region with a predetermined width R extending to the left and the right from a center set at the center position A of the encoder pattern 13B obtained in Step S304, that is, a bit pattern including vertical lines of a predetermined bit number (for example, 10 lines) included in the region with the predetermined width R with the correlation between bit pattern and angle stored in the storage unit 61. (Then, the process shifts to Step S105.)

As another example of the encoder pattern reading operation, the extraction of the angle information portion 131 in Step S305 may be performed by calculating a frequency spectrum of each pixel row from the results of linear image reading in the circumferential direction in Step S303 and, when a peak point in the spatial frequency matches the pitch of the black vertical lines of the bit pattern, extracting a corresponding pixel row as data of the angle information portion 131.

It is also possible that the camera 55 is configured to have an automatic zooming function, and according to a size of the encoder pattern portion 13 recognized as a subject in Step S101, switch the focal length to the wide-angle side or the narrow-angle side so that the size of the image of the encoder pattern 13B becomes constant irrespective of the distance.

With this configuration, irrespective of the distance from the surveying instrument 50 to the measurement module 10, an image with a size suitable for reading of the encoder pattern 13B in Step S302 can be cut out, and occurrence of a reading error according to the distance can be prevented.

Next, in Step S306, the direction angle calculation unit 66 calculates a direction angle $\theta_T$ of the surveying instrument 50 with respect to the reference direction RD by comparing the encoder pattern reading result with the correlation between bit pattern and angle stored in the storage unit 61, and ends the processing.

In this way, in the angle detection system 90 according to the present embodiment, the encoder pattern portion 13 is provided on a remote measuring object, the encoder pattern 13B is read by the camera 55 provided in the surveying instrument 50, and an angle is calculated by the arithmetic control unit 64 of the surveying instrument 50, so that an angle of the remote measuring object can be measured.

When the angle detection system 90 is applied to the survey system 100, the measurement module 10 including the distance-measuring device 14 serving as the measuring object includes the module communication unit 19, however, in a case where it is desired to simply know a direction angle $\theta_T$ of the surveying instrument with respect to the reference direction of the encoder pattern 13B, the angle measurement can be made in real time without requiring such a communication means.

The encoder pattern portion 13 is attached to an outer side of a measuring object, so that it is easily attached. Further, the encoder pattern portion 13 has a simple structure, and is easily manufactured.

1-4. Calculation of measurement point coordinates

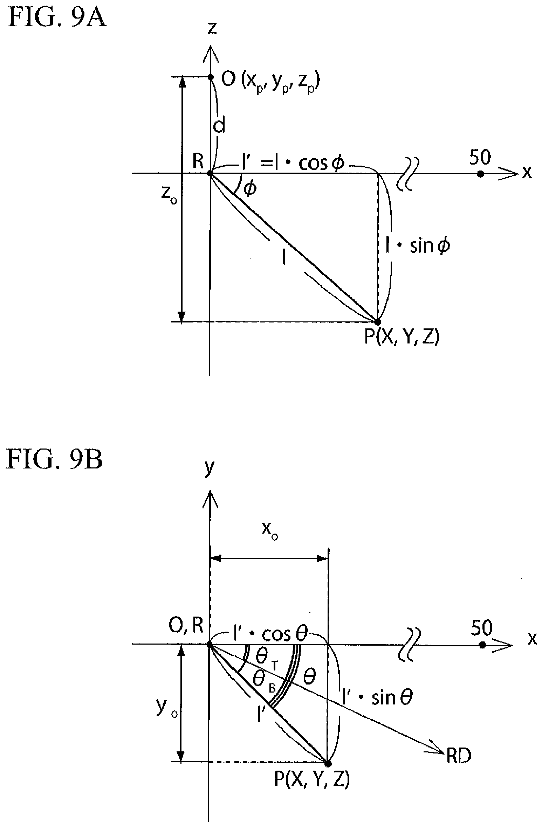

Next, a method for calculating measurement point coordinates P (X, Y, Z) by using the survey system 100 is described. FIG. 9A is a diagram illustrating a relationship between the center O of the reflection target 11, the base point R of the distance-measuring device 14, and the measurement point P in a vertical plane passing through the center O of the reflection target and the surveying instrument 50.

FIG. 9B is a diagram illustrating a relationship between the center O of the reflection target 11, the base point R of the distance-measuring device 14, and the measurement point P in the horizontal plane.

Here, the x axis indicates a horizontal direction extending in a direction from the base point R of the distance-measuring device 14 toward the surveying instrument 50, the y axis indicates a horizontal direction orthogonal to the x axis, and the z axis indicates the central axis A direction of the support member 12, that is, the vertical direction.

First, from FIG. 9A, a distance l' in the x-axis direction between the center O of the reflection target and the measurement point P is obtained according to Equation 1 by using the angle $\phi$ of the measurement point with respect to the x axis, and the distance 1 between the base point R of the distance-measuring device 14 and the measurement point P.

$$l' = l \cdot \cos \phi \ \text{... Equation 1}$$

A distance in the z-axis direction between the center O of the reflection target and the measurement point P is obtained according to d + 1·sin $\phi$.

Next, from FIG. 9B, a direction angle $\theta$ of the measurement point P with respect to the x axis is obtained according to Equation 2 by using the direction angle $\theta_T$ of the surveying instrument with respect to the reference direction RD and the direction angle $\theta_B$ of the distance-measuring device 14 with respect to the reference direction RD.

$$\theta = \theta_T + \theta_B \ \text{... Equation 2}$$

Therefore, when offset values of the measurement point P with respect to the center O of the reflection target are defined as $(x_O, y_O, z_O)$, the values of $(x_O, y_O, z_O)$ can be respectively obtained according to Equations 3, 4, and 5.

$$x_O = l' = l \cdot \cos \phi \; \ldots \text{Equation 3}$$

$$y_O = l' \cdot \sin \theta \; \ldots \text{Equation 4}$$

$$z_O = d + l \cdot \sin \phi \; \ldots \text{Equation 5}$$

From the offset values $(x_O, y_O, z_O)$ of the measurement point P obtained in this way and the coordinates O $(x_P, y_P, z_P)$ of the point O, coordinates P $(X, Y, Z)$ of the point P are obtained according to Equation 6.

$$P (X, Y, Z) = (x_P + x_O, \; y_P + y_O, \; z_P + z_O) \; \ldots \text{Equation 6}$$

In this way, according to the survey system 100, simultaneously with the measurement of the reflection target, measurements relating to a relationship between the horizontal angle, the vertical angle, and the distance between the reflection target and the measurement point are made, and based on the measurement results, a correction operation is automatically performed, so that even when the measurement point cannot be directly collimated from the surveying instrument, coordinates of the measurement point can be obtained in real time at the survey site.

In particular, as in the present embodiment, in the angle detection system 90, by attaching the distance-measuring device serving as a measuring object at a predetermined angle $\theta_E$, and measuring the distance-measuring device 14 when it is fitted to the support member 12, an angle $\theta$ of the measuring object with respect to the surveying instrument can also be measured.

However, the angle detection system according to the present embodiment can be used not only for an operation accompanied by a survey of a measurement point as described above but also for an operation unaccompanied by a survey of a measurement point, for example, installation of a member such as a steel frame in a designated direction by attaching the encoder pattern to the member and detecting the angle at the construction site, etc.

1-5. Modification 1

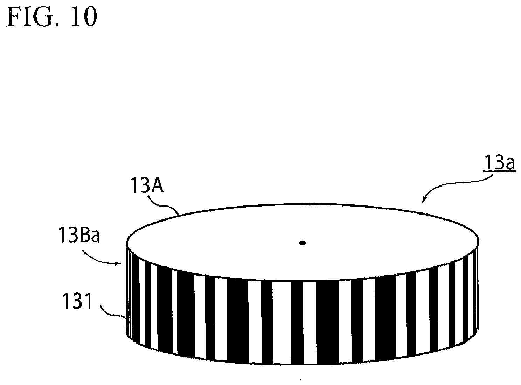

FIG. 10 is a perspective view of an encoder pattern portion 13a according to a modification of the embodiment described above. As illustrated in FIG. 10, the encoder pattern portion 13a does not include the width information portion 132. Thus, the width information portion 132 is not essential, and the width information portion 132 may not be provided. In this case, in Step S303, linear reading in the horizontal direction is performed at intervals shorter than a half of the height $h_2$ of the vertical lines 131a and 132b of the angle information portion 131, and from the reading results, left and right boundaries of the encoder pattern 13Ba are detected, and a center of the encoder pattern 13Ba can be obtained.

In this way, a center of the encoder pattern portion 13a can be obtained even when the width information portion 132 is not provided.

1-6. Modification 2

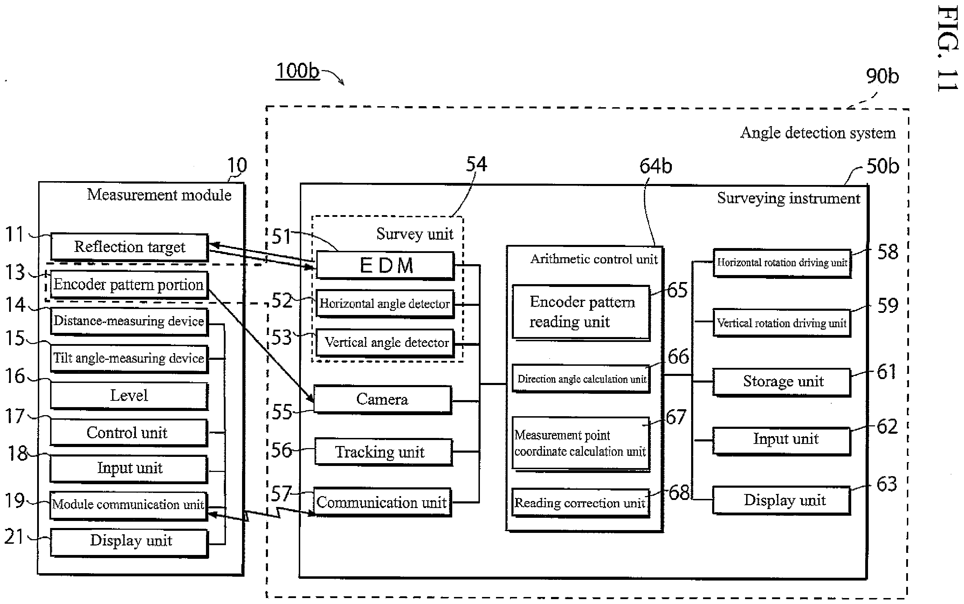

FIG. 11 is a configuration block diagram of a survey system 100b including an angle detection system 90b according to another modification of the embodiment described above. A surveying instrument 50b of the survey system 100b includes a reading correction unit 68 in the arithmetic control unit 64b.

As described above, the encoder pattern portion 13 is columnar, so that the vertical line widths $w_1$ and $w_2$ and the pitch p are observed to be narrower than the actual widths as they go outward from the center.

The reading correction unit 68 corrects read values of the widths of the vertical lines 131a and 131b which occur based on the shape of the encoder pattern portion 13. In detail, the storage unit 61 is made to store in advance reduction ratios of the widths $w_1$ and $w_2$ with respect to the distance from the center position A in a diameter L direction of the encoder pattern portion 13 as coefficients, and performs correction to develop the encoder pattern 13B into a plane by dividing a value of a width obtained by a measurement by a corresponding reduction ratio.

According to this configuration, the pixel rows can be obtained at the actual scale ratios of the width $w_1$ and $w_2$ as in the developed view illustrated in FIG. 4B, so that the calculation accuracy in conversion into a bit pattern is improved.

2. Second Embodiment

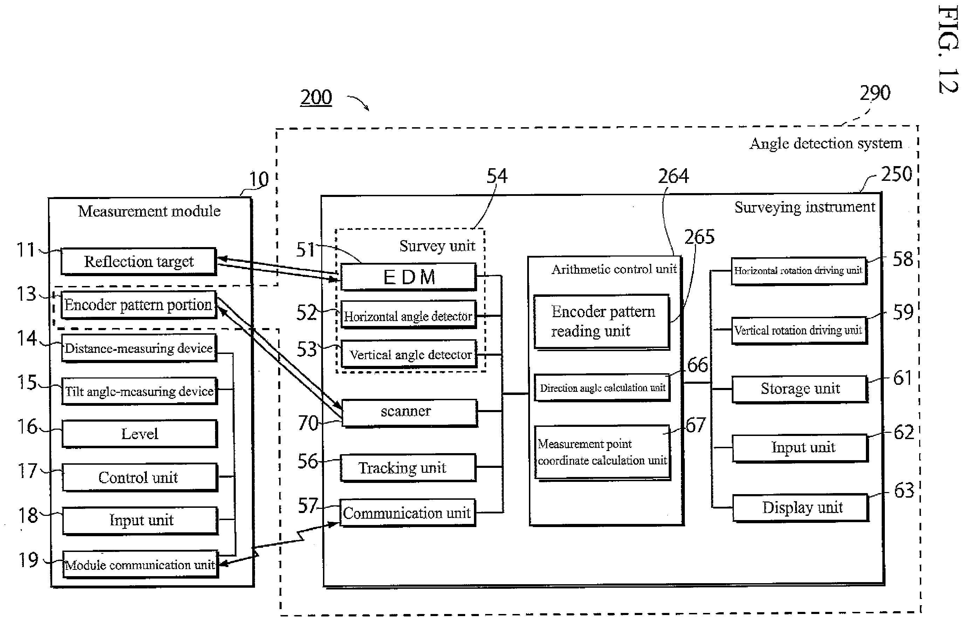

FIG. 12 is a configuration block diagram of a survey system 200 including an angle detection system 290 according to a second embodiment of the present invention.

The survey system 200 includes a measurement module 10 and a surveying instrument 250 as with the survey system 100. However, the surveying instrument 250 is different in that it does not include a camera, and instead of the camera, includes a scanner 70 that functions as an information acquiring unit. Therefore, the angle detection system 290 consists of an encoder pattern portion 13 attached to a distance-measuring device 14, and the surveying instrument 250 including the scanner 70 and an arithmetic control unit 264.

The scanner 70 includes a turning mirror, a mirror rotation driving unit, a mirror rotation angle detector, a light transmission unit, a light receiving unit, and a control unit, and is provided at, for example, an upper portion of the telescope 2b so as to be capable of performing scanning at least around a vertical axis.

The scanner 70 performs scanning by the scanning light a plurality of times in at least a horizontal direction (circumferential direction of the encoder pattern portion 13) by transmitting, for example, infrared laser light as scanning light toward the encoder pattern portion 13, and rotationally driving the turning mirror by the mirror rotation driving unit, receives reflected light from the encoder pattern 13B by the light receiving unit such as a photodiode, and acquires a received light amount distribution as scan data. In other words, the scanner 70 optically acquires information represented by the encoder pattern 13 as a received light amount distribution.

The control unit of the scanner 70 is electrically connected to the arithmetic control unit 264 of the surveying instrument 250, and the scanner 70 performs scanning according to control of the arithmetic control unit 264.

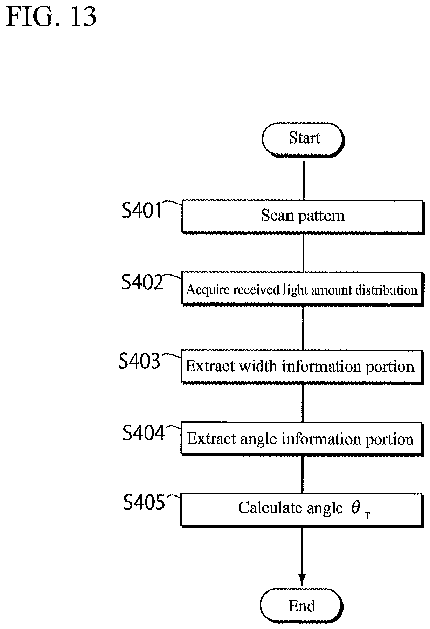

In detection of a direction angle $\theta_T$ of the surveying instrument 50 with respect to the reference direction RD of the encoder pattern 13B in an operation in a case where a measurement point P not in sight from the surveying instrument 250 is surveyed by using the survey system 200, the angle detection system 290 performs the operation illustrated in FIG. 13 instead of Steps S301 to S306 of the first embodiment.

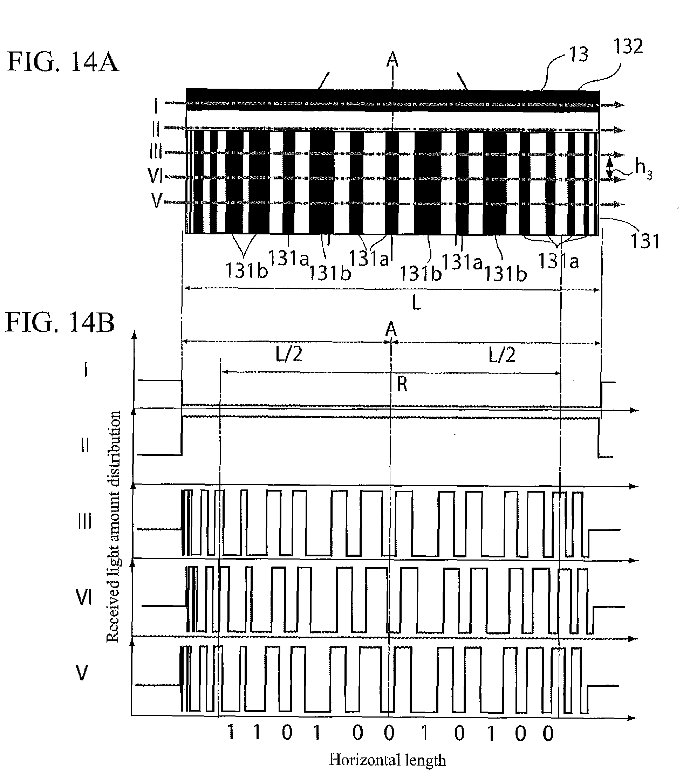

When angle detection is started, in Step S401, according to control of the encoder pattern reading unit 265, the scanner 70 scans the encoder pattern portion 13 by scanning light at intervals of, for example, the height $h_3$ as illustrated in FIG. 14A.

Next, in Step S402, the light receiving unit of the scanner 70 acquires a received light amount distribution as scan data, and outputs the scan data to the encoder pattern reading unit 265. In the received light amount distribution, the value becomes small at a black portion and becomes large at a white portion, so that the received light amount distributions at the respective positions I to V are, for example, as illustrated in FIG. 14B.

Next, in Step S403, from the received light amount distribution acquired in Step S402, the results of reading of the width information portion 132 are extracted. In detail, a region corresponding to a received light amount smaller than a predetermined threshold is determined as a black portion, a region corresponding to a received light amount larger than the predetermined threshold is determined as a white portion, and a region in which at least one of a black portion and a white portion continues for a certain length is determined as the width information portion 132. As a result, in FIG. 14B, it is found that the pixel rows I and II correspond to the width information portion 132. Then, from the detected width (diameter of the encoder pattern portion 13) L of the encoder pattern 13B, a center position A of the encoder pattern 13B is identified.

Next, in Step S404, from the received light amount distribution acquired in Step S402, correlations of the received light amount distributions at the respective positions are calculated, and portions having correlations higher than a predetermined value are extracted as the reading results of the angle information portion 131.

In the example illustrated in FIG. 14B, at the scanning positions III to V, patterns of the received light amount distributions have high correlations with each other. Therefore, the light received amount distributions at the scanning positions III to V are found to be results of reading of the angle information portion 131.

Then, the extracted received light amount distributions at the scanning positions III to V are added up in the vertical direction, and mean values are calculated. A portion with a calculated mean value smaller than a predetermined threshold is determined as a black portion, and a width of the black portion is obtained. Next, whether the obtained width value corresponds to a narrow width or a wide width of the encoder pattern 13B is determined, and a region with the width determined as a narrow width is read as a bit "0, " that is, a vertical line 131a, and a region with the width determined as a wide width is read as a bit "1," that is, a vertical line 131b.

By calculating received light amount distributions as mean values of the plurality of positions in this way, for example, as in the case of the scanning position IV, even when noise such as misalignment in the horizontal position of a received light amount distribution occurs, the influence of this misalignment can be reduced, and reading accuracy can be improved.

Next, in Step S405, the direction angle calculation unit 66 calculates a direction angle $\theta_T$ of the surveying instrument 50 with respect to the reference direction RD of the encoder pattern 13B by comparing a bit pattern included in a predetermined width R extending to the left and the right from a center set at the center position A of the encoder pattern 13B obtained in Step S403, that is, a bit pattern represented by vertical lines of a predetermined bit number (for example, 10 lines) included in the region with the predetermined width R with the correlation between bit pattern and angle stored in the storage unit 61 (then, the process shifts to Step S105).

In this way, even when the scanner 70 is used instead of the camera 55, the same effect as that of the angle detection system 90 of the first embodiment can be obtained. By using the scanner 70, the encoder pattern 13B is read by using reflected light of laser light, so that the received light amount increases, and a sufficient contrast can be obtained even in the measurement of a long distance or a situation where the amount of light is small.

When the scanner is used, reading is performed by a plurality of times of scanning, so that the reading accuracy can be improved by increasing the number of times of scanning according to a purpose.

3. Third Embodiment

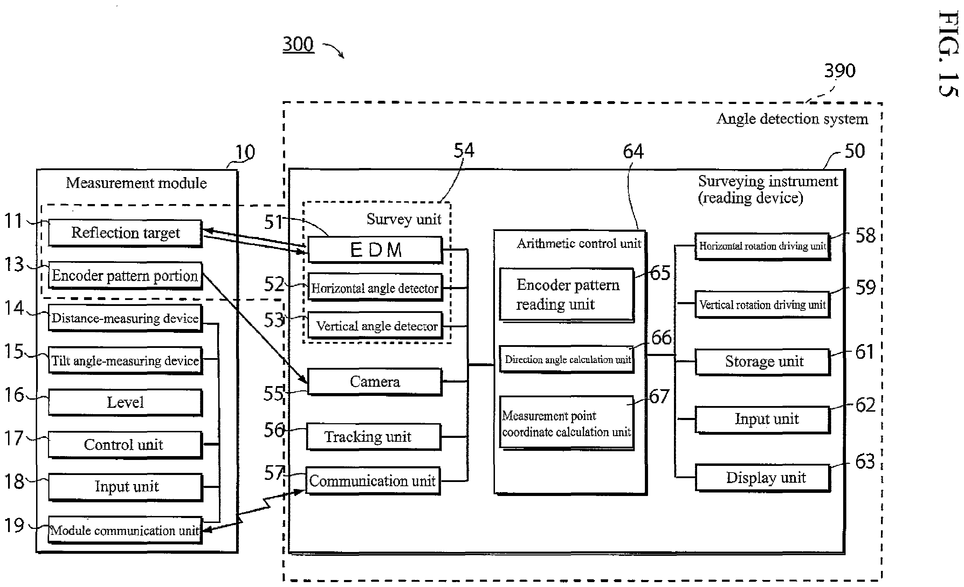

As illustrated in FIG. 15, an angle detection system 390 according to a third embodiment is provided in a survey system 300 that is the same as the survey system 100 of the first embodiment. In the angle detection system 390, the reflection target 11 is included as a component. In other respects, the mechanical configuration of the survey system 300 is the same as that of the survey system 100 of the first embodiment, so that detailed description of the mechanical configuration is omitted.

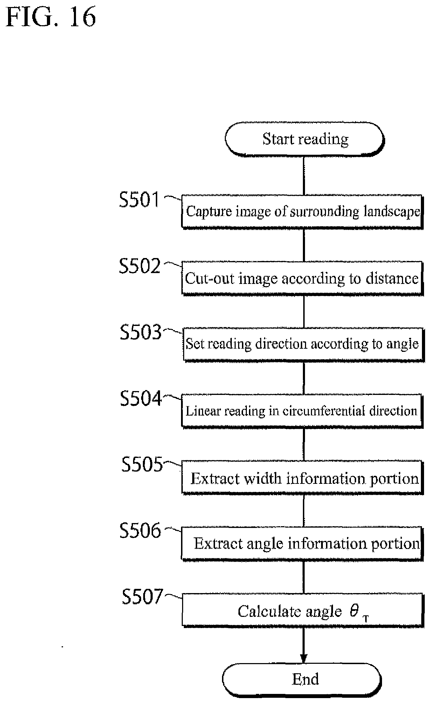

On the other hand, in the angle detection system 390 according to the third embodiment, an operation in angle detection is different from that in the angle detection system 90 as follows. FIG. 16 is a flowchart of angle detection in the angle detection system 390 according to the third embodiment.

When angle detection is started, in Step S501, as in Step S301, the camera 55 acquires a landscape image 80 around the encoder pattern portion 13 including the encoder pattern portion 13.

Next, in Step S502, the encoder pattern reading unit 65 identifies a range 81 of the encoder pattern 13B in the image based on distance measurement data of the reflection target 11 acquired in Step S101 and known dimensions of the encoder pattern portion 13 stored in the storage unit 61, and cuts the range out into a rectangular shape. By this operation, an image can be cut out into an optimum size for encoder pattern reading, and reading accuracy is improved.

Next, in Step S503, a reading direction is set based on angle measurement data of the reflection target acquired in Step S101. This setting is made by considering an influence of a positional relationship in the vertical direction between the camera 55 and the encoder pattern portion 13 on the appearance of the encoder pattern portion 13 appearing on the image.

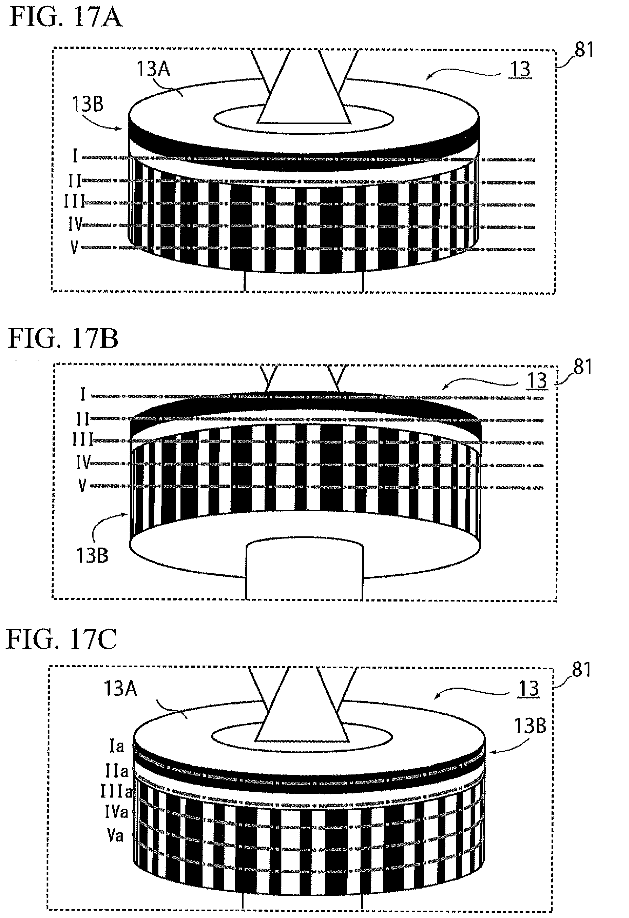

Specifically, when the camera 55 is at a position higher than the encoder pattern portion 13, as illustrated in FIG. 17A, the encoder pattern portion 13 is observed as a shape curved to protrude downward, and when the camera 55 is at a position lower than the encoder pattern portion 13, as illustrated in FIG. 17B, the encoder pattern portion 13 is observed as a shape curved to protrude upward. As a result, reading may become incomplete, and the width of a read pattern may differ.

Therefore, in advance, side surface shapes of the encoder pattern portion according to angle measurement data are calculated and the calculation results are stored in the storage unit 61, and in Step S503, based on angle measurement data acquired in Step S101, a side surface shape of the encoder pattern portion 13 in an acquired image is obtained, and according to the side surface shape, a reading direction is set so as to become parallel to an outer circumferential edge of the bottom surface or the upper surface. For example, when the image of the encoder pattern portion 13 is as illustrated in FIG. 17A, a reading direction is set so that reading along a curved line parallel to the outer circumferential edge of the bottom surface or the upper surface is performed as represented by Ia to Va in FIG. 17C.

Next, in Step S504, the encoder pattern reading unit 65 reads the image of the range 81 of the encoder pattern 13B cut out in Step S502, linearly in the circumferential direction of the encoder pattern portion 13. Here, the reading intervals $h_3$ are set to intervals $h_3$ smaller than the height $h_1$ and shorter than 1/2 of the height $h_2$ based on the distance measurement data of the reflection target 11 and known dimensions of the encoder pattern portion 13 stored in the storage unit 61 as in Step S303. By this setting, intervals that enable reliable capturing of the width information portion 132 and the angle information portion 131 can be accurately obtained, and reading accuracy is improved.

Next, in Step S505, from the reading results in Step S504, the reading results of the width information portion 132 are extracted. In detail, in a case where at least one of a black portion with a pixel value smaller than a predetermined threshold and a white portion with a pixel value larger than the predetermined threshold continues for a length corresponding to a diameter L of the encoder pattern portion calculated from the distance measurement data of the reflection target 11 acquired in Step S101 and known dimensions of the encoder pattern portion, a corresponding pixel row is determined to correspond to the width information portion 132.

Next, in Step S506, as in Step S305, from the reading results in Step S504, pixel rows corresponding to the angle information portion 131 are extracted.

Then, the process shifts to Step S507, and in the same manner as in Step S306, the direction angle calculation unit 66 obtains a direction angle $\theta_T$ of the surveying instrument 50 with respect to the reference direction RD of the encoder pattern 13B (then, the process shifts to Step S105).

In this way, in the angle detection system, by providing the reflection target and using a total station as a surveying instrument, an image can be cut out and setting of a reading direction, etc., can be performed based on a distance measured by the total station, so that reading accuracy is improved.

In the present embodiment, a configuration is also possible in which in addition to the camera 55, a narrow-angle camera sharing the optical system with the optical system of the survey unit is further provided as disclosed in Japanese Published Unexamined Patent Application No. 2016-138802, and according to a distance of the reflection target 11 calculated based on distance measurement data acquired by the survey unit, switching between the camera 55 and the narrow-angle camera can be made.

According to the configuration described above, irrespective of the distance from the surveying instrument 50 to the measurement module 10, an image with a size suitable for reading of the encoder pattern 13B in Step S302 can be cut out, and occurrence of a reading error according to the distance can be prevented.

As in the second embodiment, the scanner 70 may be used in the present embodiment instead of the camera 55.

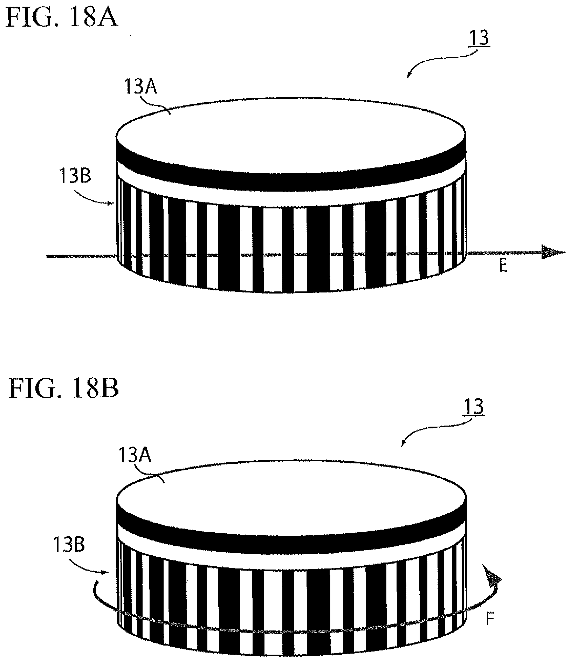

As described above, the scanner 70 is configured to perform scanning along a horizontal direction by scanning light, however, in scanning in a horizontal direction, as in the reading example by the camera illustrated in Figs. 17, when the encoder pattern portion 13 is at a position lower than the scanner 70, scanning may become incomplete as indicated by the arrow E in FIG. 18A. In addition, an error may also occur in the read pattern width. The same applies to the case where the encoder pattern portion 13 is at a position higher than the scanner 70. Therefore, as indicated by the arrow F in FIG. 18B, a configuration is also possible in which, even when the encoder pattern portion 13 is at a height different from the height of the scanner 70, scanning along a curved line is performed so that scanning is performed along the columnar surface at the same height.

In other words, a configuration is also possible in which the trajectory of scanning light is changed according to a measurement value of a vertical angle of the reflection target 11. With this configuration, the angle information portion 131 and the width information portion 132 can be scanned without fail, and reading accuracy is also improved.

4. Fourth Embodiment

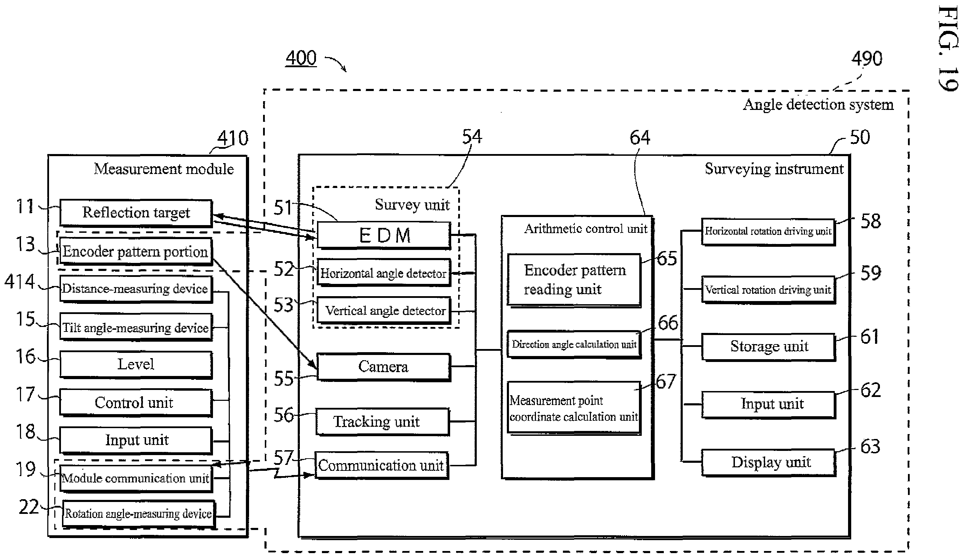

FIG. 19 is a configuration block diagram of a survey system 400 including an angle detection system 490 according to a fourth embodiment. The survey system 400 includes the same measurement module 410 and surveying instrument 50 as those of the survey system 100. However, the angle detection system 490 consists of the encoder pattern portion 13, the module communication unit (communication unit) 19, and the rotation angle-measuring device 22 provided in the measurement module 410, and the surveying instrument 50.

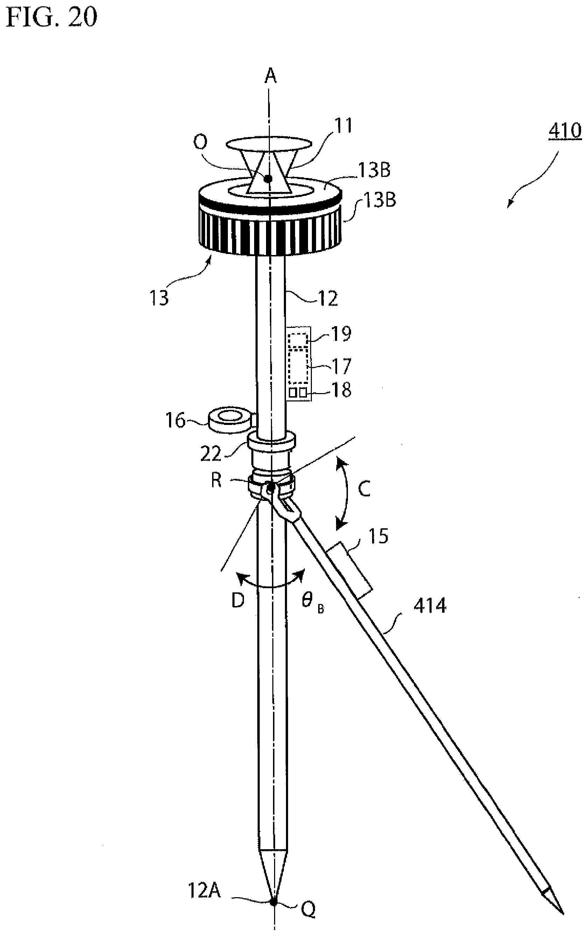

As illustrated in FIG. 20, a distance-measuring device 414 of the measurement module 410 as a measuring object is attached to the support member 12 turnably around a horizontal axis passing through a point R by setting the point R on the central axis A of the support member 12 as a base point, and in addition, the distance-measuring device 414 of the measurement module 410 is turnable also around a vertical axis passing through the point R, that is, the central axis A of the support member 12 as indicated by the double-headed arrow D.

The rotation angle-measuring device 22 is a rotary encoder, and is attached adjacent to the base point of the distance-measuring device 414 on the support member 12. The encoder pattern portion 13 includes the rotation angle-measuring device 22 via the support member 12.

An angle around the central axis of the support member 12 between a direction corresponding to 0° of the rotation angle-measuring device 22 and the reference direction RD of the encoder pattern 13B when the distance-measuring device 414 is fitted to the support member 12 is obtained at the time the distance-measuring device 414 is fitted, and is set as a correction value in the rotation angle-measuring device 22. Therefore, the rotation angle-measuring device 22 can measure a rotation angle $\theta_B$ of the distance-measuring device 414 around the central axis A of the support member 12 with respect to the reference direction RD of the encoder pattern 13B. In addition, the rotation angle-measuring device 22 outputs the measurement result to the module communication unit 19.

The module communication unit 19 transmits the measurement result of the rotation angle-measuring device 22 to the surveying instrument 50. The module communication unit 19 is provided for the encoder pattern portion 13 via the support member 12.

In this way, in the measurement module 10, the angle $\theta_B$ of the distance-measuring device 14 around the central axis A of the support member 12 with respect to the reference direction RD of the encoder pattern 13B is a fixed value, and on the other hand, in the measurement module 410, the angle is a variable value and can be measured by providing the rotation angle-measuring device 22.

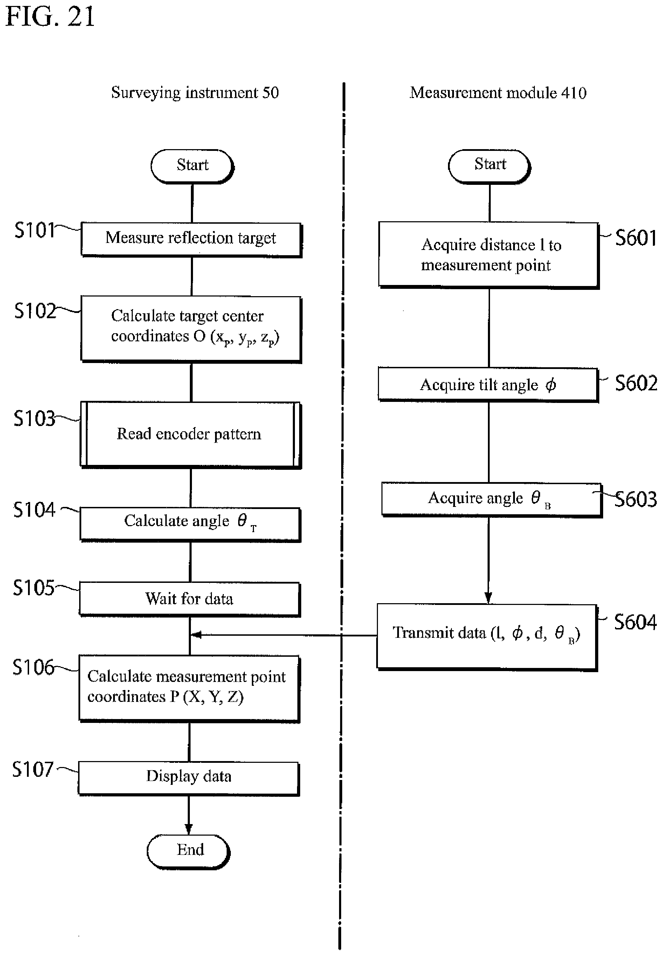

As illustrated in FIG. 21, in a survey operation for a measurement point P, as with the measurement module 10, the measurement module 410 measures a distance 1 from the base point R of the distance-measuring device 414 to the measurement point P (Step S601), and measures a tilt angle $\phi$ of the distance-measuring device 414 with respect to a horizontal plane passing through the base point R of the distance-measuring device 414 (Step S602), and in addition, in Step S603, the rotation angle-measuring device 22 measures an angle $\theta_B$ of the distance-measuring device 414 around the central axis A of the support member 12 with respect to the reference direction RD of the encoder pattern 13B, and outputs these to the module communication unit 19.

With this configuration, the distance-measuring device 414 is attached to the support member 12 turnably around the central axis A of the support member 12, so that operability when bringing the tip end of the distance-measuring device 414 into contact with the measurement point P in a state where a vertical state of the support member 12 is secured is improved. In addition, a point at an arbitrary angle to the measurement point P can be set as a temporary measurement point Q, so that the degree of freedom in setting of the temporary measurement point Q increases. In this way, the configuration that allows a measuring object to be attached at an arbitrary angle with respect to the reference direction RD of the encoder pattern 13B is advantageous.

In the above description of embodiments, examples using a total station as the surveying instrument was described. However, the surveying instrument is not limited to this, and particularly in the first and second embodiments, as the surveying instrument, an electronic level, a transit, and other surveying instruments may be used, and a camera or scanner itself to be used for a survey may be used. Further, in the third embodiment, the surveying instrument is only required to at least measure a distance to a reflection target by transmitting distance-measuring light to the reflection target and receiving reflected light of the distance-measuring light.

In the embodiments described above, examples in which the encoder pattern 13B consists of a combination of regions in two colors of black and white are described, however, without limitation to black and white, the encoder pattern may consist of a combination of colors having a strong contrast. In addition, without limitation to visible light, the encoder pattern may be configured as an encoder pattern that can be identified by polarized light.

Although preferred embodiments of the present invention are described above, the embodiments and examples described above are just examples of the present invention, and the respective configurations can be combined based on knowledge of a person skilled in the art, and modes of such combination are also included in the scope of the present invention.

REFERENCE SIGNS LIST

| 11 | Reflection target |
|---|---|
| 13A | Base |
| 13B, 13Ba | Encoder pattern |
| 13 | Encoder pattern portion |
| 19 | Module communication unit (communication unit) |
| 22 | Rotation angle-measuring device |
| 50, 50b, 250 | Surveying instrument |
| 55 | Camera (information acquiring unit) |
| 64, 64b, 264 | Arithmetic control unit |
| 70 | Scanner (information acquiring unit) |
| 90, 90b, 290, 390, 490 | Angle detection system |

**Claims**

1. An angle detection system, comprising;
   an encoder pattern portion to be attached to a measuring object; and
   a surveying instrument, wherein
   the encoder pattern portion includes
   a columnar base and an encoder pattern including an angle information portion provided on an outer circumferential side surface of the base and representing an angle in a circumferential direction with respect to a predetermined reference direction, and
   the surveying instrument includes an information acquiring unit configured to optically acquire information represented by the encoder pattern, and an arithmetic control unit configured to calculate an angle $\theta_T$ of the surveying instrument with respect to the reference direction based on the information.

2. The angle detection system according to Claim 1, wherein
   the angle information portion represents a bit pattern by disposing regions in two colors in the circumferential direction on the outer circumferential side surface of the encoder pattern portion, and

the arithmetic control unit reads the encoder pattern in the circumferential direction, converts the reading result into a bit pattern, identifies a center position of the encoder pattern from the reading result of the pattern, and calculates an angle by comparing the bit pattern included in a predetermined region centered at the center position with the correlation between bit pattern and angle set in advance.

3. The angle detection system according to Claim 2, wherein
the encoder pattern portion includes a width information portion representing a width of the encoder pattern portion, and
the arithmetic control unit extracts information of the width information portion from the information acquired by the information acquiring unit, identifies a center position of the width information portion, recognizes the center position of the width information portion as a center position of the encoder pattern portion, and calculates an angle by comparing the bit pattern included in a predetermined region centered at the center position with the correlation between bit pattern and angle set in advance.

4. The angle detection system according to any of Claims 1 to 3, wherein
the measuring object is attached at a predetermined angle $\theta_B$ in the circumferential direction with respect to the reference direction, and
the arithmetic control unit calculates an angle ($\theta$) of the measuring object with respect to the surveying instrument based on the predetermined angle ($\theta_B$) and the angle ($\theta_T$) of the surveying instrument with respect to the reference direction.

5. The angle detection system according to any of Claims 1 to 4, wherein
the measuring object is attached to the encoder pattern portion turnably around a central axis of the encoder pattern portion,
the measuring object includes a rotation angle-measuring device capable of measuring the predetermined angle and a communication unit, and
the surveying instrument is configured to be capable of communicating with the communication unit.

6. The angle detection system according to any of Claims 1 to 5, wherein
the arithmetic control unit includes a reading correction unit configured to correct the columnar encoder pattern so as to develop the encoder pattern into a plane by dividing the encoder pattern representing the bit pattern by a reduction ratio set in advance according to a ratio of distance from a center position in a diameter direction of the encoder pattern portion.

7. The angle detection system according to any of Claims 1 to 6, wherein
the information acquiring unit is a camera configured to acquire information represented by the encoder pattern as an image.

8. The angle detection system according to any of Claims 1 to 6, wherein
the information acquiring unit is a scanner configured to acquire information represented by the encoder pattern as a received light amount distribution by transmitting scanning light to the encoder pattern and receiving reflected light from the encoder pattern.

9. The angle detection system according to any of Claims 1 to 8, wherein
the encoder pattern portion further includes a reflection target,
the surveying instrument is configured to measure a distance to the reflection target by transmitting distance-measuring light to the reflection target and receiving reflected light from the reflection target, and measure an angle to the reflection target, and
the arithmetic control unit identifies the encoder pattern based on distance measurement data of the reflection target.

10. The angle detection system according to any of Claims 1 to 8, wherein
the encoder pattern portion further includes a reflection target,
the surveying instrument is configured to measure a distance to the reflection target by transmitting distance-measuring light to the reflection target and receiving reflected light from the reflection target, and measure an angle to the reflection target, and
the arithmetic control unit sets a reading direction in the circumferential direction based on angle measurement data of the reflection target.

11. An angle detection method for detecting an angle by using an encoder pattern portion including a columnar base and an encoder pattern disposed on an outer circumferential side surface of the base and representing an angle in the circumferential direction with respect to a predetermined reference direction, and a surveying instrument including an information acquiring unit, comprising:

(a) attaching the encoder pattern portion to the measuring object at a predetermined angle in the circumferential direction of the encoder pattern portion;
(b) optically acquiring information represented by the encoder pattern as pattern information by the information acquiring unit; and
(c) operating an angle of the surveying instrument with respect to the reference direction based on pattern information acquired through (b).

**Amended claims under Art. 19.1 PCT**

1. An angle detection system, comprising;
an encoder pattern portion to be attached to a measuring object; and
a surveying instrument, wherein
the encoder pattern portion includes
a columnar base and an encoder pattern including an angle information portion provided on an outer circumferential side surface of the base and representing an angle in a circumferential direction with respect to a predetermined reference direction,
the surveying instrument includes an information acquiring unit configured to optically acquire information represented by the encoder pattern, and an arithmetic control unit configured to calculate an angle $O_T$ of the surveying instrument with respect to the reference direction based on the information,
the angle information portion represents a bit pattern, and
the arithmetic control unit reads the encoder pattern in the circumferential direction, converts the reading result into the bit pattern, identifies a center position of the encoder pattern from the reading result of the encoder pattern, and calculates an angle by comparing the bit pattern included in a predetermined region centered at the center position with correlation between the bit pattern and angle, set in advance.

2. The angle detection system according to Claim 1, wherein
the angle information portion represents the bit pattern by disposing regions in two colors in the circumferential direction on the outer circumferential side surface of the encoder pattern portion.

3. The angle detection system according to Claim 2, wherein
the encoder pattern portion includes a width information portion representing a width of the encoder pattern portion, and
the arithmetic control unit extracts information of the width information portion from the information acquired by the information acquiring unit, identifies a center position of the width information portion, recognizes the center position of the width information portion as a center position of the encoder pattern portion, and calculates an angle by comparing the bit pattern included in a predetermined region centered at the center position with the correlation between the bit pattern and angle set in advance.

4. The angle detection system according to any of Claims 1 to 3, wherein
the measuring object is attached at a predetermined angle $O_B$ in the circumferential direction with respect to the reference direction, and
the arithmetic control unit calculates an angle ($\theta$) of the measuring object with respect to the surveying instrument based on the predetermined angle ($\theta_B$) and the angle ($\theta_T$) of the surveying instrument with respect to the reference direction.

5. The angle detection system according to any of Claims 1 to 4, wherein
the measuring object is attached to the encoder pattern portion turnably around a central axis of the encoder pattern portion,
the measuring object includes a rotation angle-measuring device capable of measuring the predetermined angle and a communication unit, and
the surveying instrument is configured to be capable of communicating with the communication unit.

**6.** The angle detection system according to any of Claims 1 to 5, wherein
the arithmetic control unit includes a reading correction unit configured to correct the columnar encoder pattern so as to develop the encoder pattern into a plane by dividing the encoder pattern representing the bit pattern by a reduction ratio set in advance according to a ratio of distance from a center position in a diameter direction of the encoder pattern portion.

**7.** The angle detection system according to any of Claims 1 to 6, wherein
the information acquiring unit is a camera configured to acquire information represented by the encoder pattern as an image.

**8.** The angle detection system according to any of Claims 1 to 6, wherein
the information acquiring unit is a scanner configured to acquire information represented by the encoder pattern as a received light amount distribution by transmitting scanning light to the encoder pattern and receiving reflected light from the encoder pattern.

**9.** The angle detection system according to any of Claims 1 to 8, wherein
the encoder pattern portion further includes a reflection target,
the surveying instrument is configured to measure a distance to the reflection target by transmitting distance-measuring light to the reflection target and receiving reflected light from the reflection target, and measure an angle to the reflection target, and
the arithmetic control unit identifies the encoder pattern based on distance measurement data of the reflection target.

**10.** The angle detection system according to any of Claims 1 to 8, wherein
the encoder pattern portion further includes a reflection target,
the surveying instrument is configured to measure a distance to the reflection target by transmitting distance-measuring light to the reflection target and receiving reflected light from the reflection target, and measure an angle to the reflection target, and
the arithmetic control unit sets a reading direction in the circumferential direction based on angle measurement data of the reflection target.

**11.** An angle detection method for detecting an angle by using an encoder pattern portion including a columnar base and an encoder pattern disposed on an outer circumferential side surface of the base and representing an angle in the circumferential direction with respect to a predetermined reference direction, and a surveying instrument including an information acquiring unit, comprising:

(a) attaching the encoder pattern portion to the measuring object at a predetermined angle in the circumferential direction of the encoder pattern portion;
(b) optically acquiring information represented by the encoder pattern as pattern information by the information acquiring unit; and
(c) calculating an angle of the surveying instrument with respect to the reference direction based on pattern information acquired through (b), wherein

the angle information portion represents a bit pattern, and
the arithmetic control unit reads the encoder pattern in the circumferential direction, converts the reading result into the bit pattern, identifies a center position of the encoder pattern from the reading result of the encoder pattern, and calculates an angle by comparing the bit pattern included in a predetermined region centered at the center position with correlation between the bit pattern and angle set in advance.

**Statement under Art. 19.1 PCT**

An amendment to add the features described in Claim 2 as of the application was made in Claims 1 and 11.
An amendment was made to delete a part of the features of Claim 2.
An amendment was made to correct an obvious error in writing in Claim 3.

# FIG. 1

FIG. 2

FIG. 3

## FIG. 4A

## FIG. 4B

FIG. 5

## FIG. 6

Surveying instrument 50 | Measurement module 10

```
                Start                                    Start
```

S101 — Measure reflection target | S201 — Acquire distance l to measurement point

S102 — Calculate target center coordinates O $(x_p, y_p, z_p)$

S103 — Read encoder pattern | S202 — Acquire tilt angle $\phi$

S104 — Calculate angle $\theta_T$

S105 — Wait for data | S203 — Transmit data (l, $\phi$, d, $\theta_B$)

S106 — Calculate measurement point coordinates P (X, Y, Z)

S107 — Display data

```
                 End
```

# FIG. 7

```
                    ┌────────────────────┐
                    │   Start reading     │
                    └────────────────────┘
                              │
S301 ──┤ Capture image of surrounding landscape │
                              │
S302 ──┤          Cut-out image               │
                              │
S303 ──┤ Linear reading in circumferential direction │
                              │
S304 ──┤   Extract width information portion  │
                              │
S305 ──┤   Extract angle information portion  │
                              │
S306 ──┤       Calculate angle $\theta_T$      │
                              │
                              ▼
                    ┌────────────────────┐
                    │        End          │
                    └────────────────────┘
```

FIG. 8A

FIG. 8B

FIG. 8C

Horizontal length

FIG. 9A

FIG. 9B

FIG. 10

FIG. 11

EP 3 832 257 A1

## FIG. 12

FIG. 12 — Angle detection system 290; Surveying instrument 250; Measurement module 10; Survey unit 54 including EDM (51), Horizontal angle detector (52), Vertical angle detector (53); scanner (70), Tracking unit (56), Communication unit (57); Arithmetic control unit 264, Encoder pattern reading unit 265, Direction angle calculation unit 66, Measurement point coordinate calculation unit 67; Horizontal rotation driving unit (58), Vertical rotation driving unit (59), Storage unit (61), Input unit (62), Display unit (63); Measurement module 10: Reflection target (11), Encoder pattern portion (13), Distance-measuring device (14), Tilt angle-measuring device (15), Level (16), Control unit (17), Input unit (18), Module communication unit (19). Reference 200.

## FIG. 13

Start

S401 — Scan pattern

S402 — Acquire received light amount distribution

S403 — Extract width information portion

S404 — Extract angle information portion

S405 — Calculate angle $\theta_T$

End

FIG. 14A

FIG. 14B

Received light amount distribution

Horizontal length

1  1  0  1    0  0  1  0  1  0  0

# FIG. 15

300

390

Angle detection system

**Measurement module** 10

- Reflection target 11
- Encoder pattern portion 13
- Distance-measuring device 14
- Tilt angle-measuring device 15
- Level 16
- Control unit 17
- Input unit 18
- Module communication unit 19

**Surveying instrument (reading device)** 50

Survey unit 54
- E D M 51
- Horizontal angle detector 52
- Vertical angle detector 53
- Camera 55
- Tracking unit 56
- Communication unit 57

Arithmetic control unit 64
- Encoder pattern reading unit 65
- Direction angle calculation unit 66
- Measurement point coordinate calculation unit 67

- Horizontal rotation driving unit 58
- Vertical rotation driving unit 59
- Storage unit 61
- Input unit 62
- Display unit 63

# FIG. 16

Start reading

S501 — Capture image of surrounding landscape

S502 — Cut-out image according to distance

S503 — Set reading direction according to angle

S504 — Linear reading in circumferential direction

S505 — Extract width information portion

S506 — Extract angle information portion

S507 — Calculate angle $\theta_T$

End

FIG. 17A

FIG. 17B

FIG. 17C

FIG. 18A

FIG. 18B

FIG. 19

## FIG. 20

# FIG. 21

Surveying instrument 50

Measurement module 410

Start

S101 — Measure reflection target

S102 — Calculate target center coordinates O $(x_p, y_p, z_p)$

S103 — Read encoder pattern

S104 — Calculate angle $\theta_T$

S105 — Wait for data

S106 — Calculate measurement point coordinates P (X, Y, Z)

S107 — Display data

End

Start

Acquire distance l to measurement point — S601

Acquire tilt angle $\phi$ — S602

Acquire angle $\theta_B$ — S603

Transmit data (l, $\phi$, d, $\theta_B$) — S604

**INTERNATIONAL SEARCH REPORT**

| International application No. |
|---|
| PCT/JP2019/029422 |

A. CLASSIFICATION OF SUBJECT MATTER
Int.Cl. G01C15/00(2006.01)i, G01C15/06(2006.01)i, G01D5/347(2006.01)i

According to International Patent Classification (IPC) or to both national classification and IPC

B. FIELDS SEARCHED

Minimum documentation searched (classification system followed by classification symbols)
Int.Cl. G01C15/00, G01C15/06, G01D5/347

Documentation searched other than minimum documentation to the extent that such documents are included in the fields searched
    Published examined utility model applications of Japan    1922-1996
    Published unexamined utility model applications of Japan    1971-2019
    Registered utility model specifications of Japan    1996-2019
    Published registered utility model applications of Japan    1994-2019

Electronic data base consulted during the international search (name of data base and, where practicable, search terms used)


C. DOCUMENTS CONSIDERED TO BE RELEVANT

| Category* | Citation of document, with indication, where appropriate, of the relevant passages | Relevant to claim No. |
|---|---|---|
| X | US 2016/0178406 A1 (WANG, Yong) 23 June 2016, paragraphs [0009], [0010], [0065]-[0084], [0093], [0098], [0107], fig. 1A-3B, 4D, 5E, 6N & WO 2014/058390 A1 & CN 104254755 A | 1, 4, 7, 11 |
| PA | JP 2019-105515 A (TOPCON CORPORATION) 27 June 2019, entire text, all drawings (Family: none) | 1-11 |
| PA | JP 2019-20209 A (TOPCON CORPORATION) 07 February 2019, entire text, all drawings & US 2019/0018142 A1 & EP 3428575 A1 | 1-11 |

☒   Further documents are listed in the continuation of Box C.    ☐   See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
|     11 October 2019 (11.10.2019) |     29 October 2019 (29.10.2019) |

| Name and mailing address of the ISA/ | Authorized officer |
|---|---|
|     Japan Patent Office | |
|     3-4-3, Kasumigaseki, Chiyoda-ku, | |
|     Tokyo 100-8915, Japan | Telephone No. |

Form PCT/ISA/210 (second sheet) (January 2015)

**EP 3 832 257 A1**

**INTERNATIONAL SEARCH REPORT**

International application No.

PCT/JP2019/029422

C (Continuation). DOCUMENTS CONSIDERED TO BE RELEVANT

| Category* | Citation of document, with indication, where appropriate, of the relevant passages | Relevant to claim No. |
|---|---|---|
| A | JP 2016-145791 A (TOPCON CORPORATION) 12 August 2016, entire text, all drawings & US 2016/0216110 A1 & DE 102016200877 A & CN 105823471 A | 1-11 |
| A | JP 7-139942 A (WACOM CO., LTD.) 02 June 1995, entire text, all drawings (Family: none) | 1-11 |
| A | JP 60-80707 A (TSUMURA, Toshihiro, TSUMURA, Takeshi) 08 May 1985, entire text, all drawings (Family: none) | 1-11 |
| A | US 2009/0024325 A1 (SCHERZINGER, Bruno M.) 22 January 2009, whole documents (Family: none) | 1-11 |

Form PCT/ISA/210 (continuation of second sheet) (January 2015)

41

**EP 3 832 257 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05172588 B
- JP 2016138802 A